# EUROPEAN PATENT APPLICATION

(11) **EP 4 068 781 A1**
(43) Date of publication of application: **05.10.2022**
(21) Application number: 22158612.6
(22) Date of filing: 24.02.2022
(51) Int. Cl.: H04N 19/46, G06F 16/71, H04N 19/70, H04N 21/235, H04N 21/845, H04N 21/854, H04N 21/8547

(54) **FILE FORMAT WITH IDENTIFIED MEDIA DATA BOX MAPPING WITH TRACK FRAGMENT BOX**

(30) Priority: 31.03.2021 FI 20215385
(71) Applicant: Nokia Technologies Oy, 02610 Espoo (FI)
(72) Inventor: KAMMACHI SREEDHAR, Kashyap, Tampere (FI); AKSU, Emre Baris, Tampere (FI); HANNUKSELA, Miska Matias, Tampere (FI)
(74) Representative: Nokia EPO representatives

(57) **Abstract**

There are disclosed various methods, apparatuses and computer program products for media encapsulating and decapsulating. In accordance with an example, there is disclosed a method comprising obtaining an identifier; writing in an index segment an identified media data element; and including into the identified media data element the identifier to be used as a reference for the identified media data by other elements. There is also disclosed a method comprising receiving a file comprising an identifier in a track fragment header or in a structure which is companion to the track fragment header or deriving the identifier from a movie fragment sequence number and a track identifier of a track fragment; identifying a media data structure; and identifying a location of media data based on the identifier in the identified media data structure.

## Description

### TECHNICAL FIELD

The present invention relates generally to the use of media file formats. More particularly, the present invention relates to a method for encapsulating media data signal into a file and a method for decapsulating media data from a file. The present invention also relates to apparatuses and computer program products for encapsulating media data into a file and apparatuses and computer program products for decapsulating media data from a file.

### BACKGROUND

This section is intended to provide a background or context to the invention that is recited in the claims. The description herein may include concepts that could be pursued, but are not necessarily ones that have been previously conceived or pursued. Therefore, unless otherwise indicated herein, what is described in this section is not prior art to the description and claims in this application and is not admitted to be prior art by inclusion in this section.

A media container file format is an element in a chain of media content production, manipulation, transmission and consumption. In this context, the coding format (i.e., the elementary stream format) relates to an action of a specific coding algorithm that codes the content information into a bitstream. The container file format comprises mechanisms for organizing the generated bitstream in such a way that it can be accessed for local decoding and playback, transferring as a file, or streaming, all utilizing a variety of storage and transport architectures. The container file format can also facilitate the interchanging and editing of the media, as well as the recording of received real-time streams to a file. As such, there may be substantial differences between the coding format and the container file format.

An ISO Base Media File Format (ISOBMFF) defines an identified media data box or IdentifiedMediaDataBox with a four-character coded (4cc) notation 'imda'. The IdentifiedMediaDataBox box may have the same semantics as a media data box or MediaDataBox with the four-character code 'mdat'. However, the IdentifiedMediaDataBox additionally carries a unique identifier that is used in setting up data references to the contained media data. Movie fragment boxes (MovieFragmentBox, 'moof') are linked to its media data counter part (IdentifiedMediaDataBoxes) via the unique identifier value, which is present in both MovieFragmentBox and its related IdentifiedMediaDataBox.

Tile-based streaming applications, such as OMAF (Omnidirectional Media Format), may make use of Tile Index Segments. MovieFragmentBox(es) of different tiles and qualities may be contained in the tile index segment.

A single MovieFragmentBox may contain track fragment boxes (TrackFragmentBox, 'traf') from different tiles and qualities. When this happens the corresponding media data of different tiles and quality levels is bound to a single IdentifiedMediaDataBox due to the unique identifier used for in setting up data references.

Hence it is desired to provide a solution that may be able to remove the binding of having the media data of different tiles and quantities contained in a single IdentifiedMediaDataBox.

### BRIEF SUMMARY

Various embodiments provide systems and methods for media encapsulating and decapsulating.

Various aspects of examples of the disclosure are provided in the detailed description.

According to a first aspect there is provided a method comprising:
obtaining an identifier;
writing in an index segment an identified media data element;
including into the identified media data element the identifier to be used as a reference for the identified media data by other elements.

According to a second aspect there is provided an apparatus comprising at least one processor and at least one memory, said at least one memory stored with code thereon, which when executed by said at least one processor, causes an apparatus to perform at least the following:
obtain an identifier;
write in an index segment an identified media data element; and
include into the identified media data element the identifier to be used as a reference for the identified media data by other elements.

According to a third aspect there is provided a computer program product embodied on a non-transitory computer readable medium, comprising computer program code configured to, when executed on at least one processor, cause an apparatus or a system to:
obtain an identifier;
write in an index segment an identified media data element;
include into the identified media data element the identifier to be used as a reference for the identified media data by other elements.

According to a fourth aspect there is provided a method comprising:
receiving a file comprising an identifier in a track fragment header or in a structure which is companion to the track fragment header or deriving the identifier from a movie fragment sequence number and a track identifier of a track fragment;
identifying a media data structure; and
identifying a location of media data based on the identifier in the identified media data structure.

According to a fifth aspect there is provided an apparatus comprising at least one processor and at least one memory, said at least one memory stored with code thereon, which when executed by said at least one processor, causes an apparatus to perform at least the following:
receive a container file comprising an identifier in a track fragment header or in a structure which is companion to the track fragment header or deriving the identifier from a movie fragment sequence number and a track identifier of a track fragment;
identify a media data structure; and
identify a location of media data based on the identifier in the identified media data structure.

According to a sixth aspect there is provided a computer program product embodied on a non-transitory computer readable medium, comprising computer program code configured to, when executed on at least one processor, cause an apparatus or a system to:
receive a file comprising an identifier in a track fragment header or in a structure which is companion to the track fragment header or deriving the identifier from a movie fragment sequence number and a track identifier of a track fragment;
identify a media data structure; and
identify a location of media data based on the identifier in the identified media data structure.

According to a seventh aspect there is provided an apparatus configured to perform the method of the first aspect.

According to an eighth aspect there is provided an apparatus configured to perform the method of the fourth aspect.

### BRIEF DESCRIPTION OF THE DRAWING(S)

Having thus described some embodiments of the disclosure in general terms, reference will now be made to the accompanying drawings, which are not necessarily drawn to scale, and wherein:
Fig. 1 shows an example containment hierarchy of International Organization for Standardization base media file format box structures;
Fig. 2 illustrates a simplified file structure according to the ISO base media file format;
Fig. 3a depicts an example of an apparatus suitable for composing media files;
Fig. 3b depicts an example of an apparatus suitable for decomposing container files;
Fig. 4a depicts a flow diagram of a method for composing media files, in accordance with an embodiment;
Fig. 4b depicts a flow diagram of a method for decomposing media files, in accordance with an embodiment;
Fig. 5 depicts an example illustration of some functional blocks, formats, and interfaces included in an HTTP streaming system;
Fig. 6a illustrates an example of a regular web server operating as a HTTP streaming server;
Fig. 6b illustrates an example of a regular web server connected with a dynamic streaming server;
Fig. 7a illustrates an example of utilization of track fragment header identifier box in OMAF simple and advanced tiling profiles, in accordance with an embodiment of the disclosure;
Fig. 7b illustrates an example of mapping between a movie fragment box with multiple track fragment boxes and indexed media segments, in accordance with an embodiment of the disclosure;
Fig. 8 is a graphical representation of an example of a generic media communication system within which various embodiments may be implemented;
Fig. 9 shows schematically a user equipment suitable for employing some embodiments of the disclosure;
Fig. 10 further shows schematically electronic devices employing embodiments of the disclosure connected using wireless and/or wired network connections; and

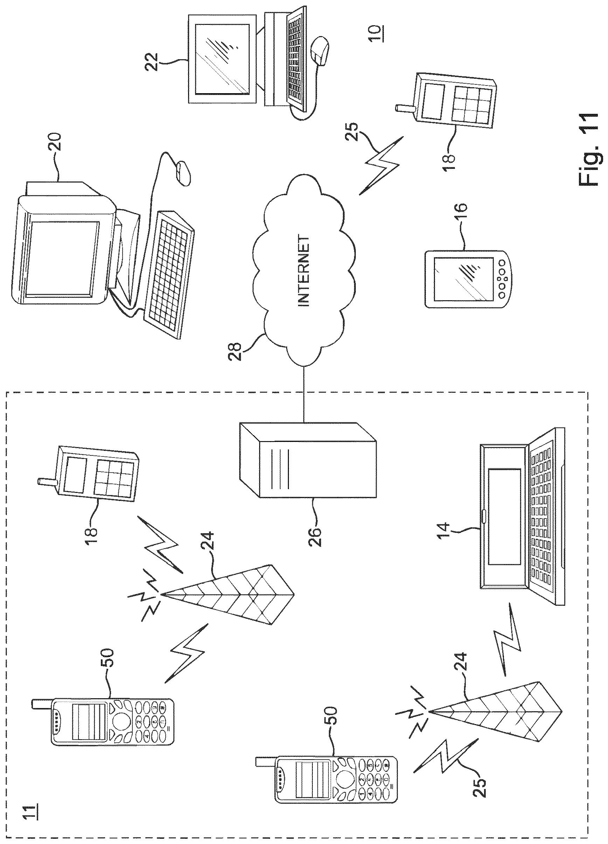

Fig. 11 shows an arrangement for video coding comprising a plurality of apparatuses, networks and network elements according to an example embodiment..

### DETAILED DESCRIPTION

Some embodiments of the present disclosure will now be described more fully hereinafter with reference to the accompanying drawings, in which some, but not all embodiments of the disclosure are shown. Indeed, various embodiments of the disclosure may be embodied in many different forms and should not be construed as limited to the embodiments set forth herein; rather, these embodiments are provided so that this disclosure will satisfy applicable legal requirements. Like reference numerals refer to like elements throughout. As used herein, the terms "data," "content," "information" and similar terms may be used interchangeably to refer to data capable of being transmitted, received and/or stored in accordance with some embodiments of the present disclosure. Thus, use of any such terms should not be taken to limit the spirit and scope of embodiments of the present disclosure.

Additionally, as used herein, the term 'circuitry' refers to (a) hardware-only circuit implementations (e.g., implementations in analog circuitry and/or digital circuitry); (b) combinations of circuits and computer program product(s) comprising software and/or firmware instructions stored on one or more computer readable memories that work together to cause an apparatus to perform one or more functions described herein; and (c) circuits, such as, for example, a microprocessor(s) or a portion of a microprocessor(s), that require software or firmware for operation even if the software or firmware is not physically present. This definition of 'circuitry' applies to all uses of this term herein, including in any claims. As a further example, as used herein, the term 'circuitry' also includes an implementation comprising one or more processors and/or portion(s) thereof and accompanying software and/or firmware. As another example, the term 'circuitry' as used herein also includes, for example, a baseband integrated circuit or applications processor integrated circuit for a mobile phone or a similar integrated circuit in a server, a cellular network device, other network device, and/or other computing device.

As defined herein a "computer-readable storage medium," which refers to a non-transitory, physical storage medium (e.g., volatile or non-volatile memory device), can be differentiated from a "computer-readable transmission medium," which refers to an electromagnetic signal.

Some further definitions used in this specification may be described as follows. A coding format (which may also be referred to as media compression format) may relate to an action of a specific coding algorithm that codes content information into a bitstream. Media data may be defined as a sequence of bits that forms a coded representation of multimedia, e.g., coded representation of pictures, coded representation of an image or images, coded representation of audio or speech, coded representation of graphics. Coded representation of multimedia usually conforms to a coding format, such as H.264/AVC, H.265/HEVC, AMR, etc. A container file format may comprise means of organizing the generated bitstream in such a way that it may be accessed for decoding and playback, transferred as a file, or streamed, all possibly utilizing a variety of storage and transport architectures. Furthermore, a container file format can facilitate interchange and editing of the media as well as recording of received real-time streams to a file. Metadata may be understood to comprise structural or descriptive information about media data.

When media data is stored using a container file format, at least part of the metadata may be represented by the file format structures of the container file format. However, a part of the metadata may be represented using a metadata format that is distinct from the container file format. For example, the metadata format and the container file format may be specified in different specifications and/or they may use different basic units or elements. For example, the container file format may be based on elements comprising key-length-value triplets, where the key indicates the type of information, the length indicates the size of the information, and the value comprises the information itself. The box structure used in the ISO Base Media File Format may be regarded as an example of a container file element comprising of a key-length-value triplet. Continuing the same example, a metadata format may be based on an XML (Extensible Markup Language) schema.

Some media file format standards include ISO base media file format (ISO/IEC 14496-12, which may be abbreviated ISOBMFF), MPEG-4 file format (ISO/IEC 14496-14, also known as the MP4 format), ISO/IEC 14496-15 ("Carriage of network abstraction layer (NAL) unit structured video in the ISO base media file format", which may be used for H.264/AVC and/or H.265/HEVC), the High Efficiency Image File Format (ISO/IEC 23008-12, which may be abbreviated HEIF) and 3GPP (3^{rd} Generation Partnership Project) file format (3GPP TS 26.244, also known as the 3GP format). The file format for scalable video coding (SVC) and the multiview video coding (MVC) extensions of H.264/AVC as well as the multi-layer extensions (MV-HEVC, SHVC, 3D-HEVC) of H.265/HEVC are specified as part of ISO/IEC 14496-15. The ISO file format is the base for derivation of all the above mentioned file formats, excluding the ISO file format itself.

As was mentioned earlier in this description, a single MovieFragmentBox may contain track fragment boxes (TrackFragmentBox, 'traf') from different tiles and qualities, wherein the corresponding media data of different tiles and quality levels are bound to a single IdentifiedMediaDataBox due to the unique identifier used for in setting up data references. Having the media data of different tiles and qualities contained in a single IdentifiedMediaDataBox may not be a desirable scenario due to e.g. the following reasons.
1) An entity may download/request/receive only a part of the IdentifiedMediaDataBox, with the partial IdentifiedMediaDataBox containing the media data of a specific quality or a tile. A player may not be able to create a sequence of boxes that conform to ISOBMFF in a straightforward way since IdentifiedMediaDataBoxes are received only partially. A conforming box sequence may be required e.g. when the player desires to use an ISOBMFF parser for processing the media data or when the player uses an API (application programming interface) that uses a conforming box sequence as an interface. In another example, a source buffer of W3C (World Wide Web Consortium) Media Source Extensions (MSE) that is indicated to conform to the MIME type of ISOBMFF is such an interface. Creating a conforming box sequence from partially received IdentifiedMediaDataBoxes may require either rewriting of the IdentifiedMediaDataBoxes and MovieFragmentBoxes to be tightly packed or filling in the parts of IdentifiedMediaDataBoxes that have not been received.
2) Accessing data within a single IdentifiedMediaDataBox in a non-contiguous manner may require byte range requests. However, HTTP (Hypertext transfer protocol) servers might not support range-based requests (support for range-based requests is optional in http 1.1). Additionally, caching in HTTP proxy servers or CDN (content delivery network) edge servers might not support range-based caching but rather entire resources are cached, which may cause unnecessary data transmission from the origin server to the caching server and unnecessary data storage in the caching server.
3) It may increase the complexity in terms of content maintenance - for example if only one tile or quality level is re-encoded the file writer has to re-write all the boxes and the related data offset fields, which is not a scalable option.

Some concepts, structures, and specifications of ISOBMFF are described below as an example of a container file format, based on which one or more embodiments of the disclosure may be implemented. The aspects of the disclosure are not limited to ISOBMFF, but rather the description is given for one possible basis on top of which one or more embodiments of the disclosure may be partly or fully realized.

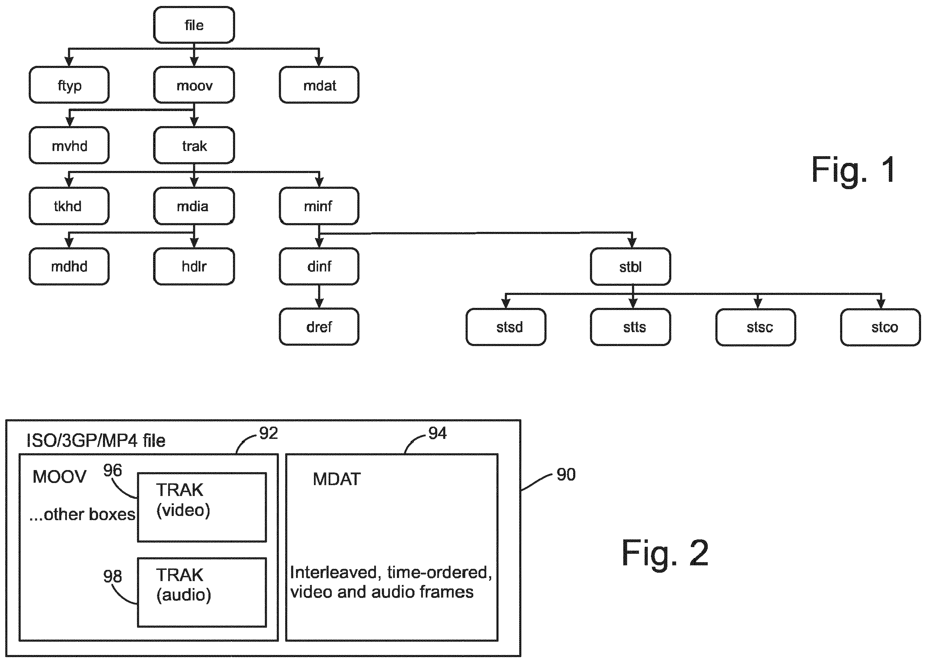

One building block in the ISO base media file format is called a box. For example, coded sample data referred from a MovieBox or a MovieFragmentBox may always reside in a MediaDataBox. Each box may have a header and a payload. The box header indicates the type of the box and the size of the box in terms of bytes. All media data and its related metadata may be encapsulated into boxes. A box may enclose other boxes, and the ISO file format specifies which box types are allowed within a box of a certain type. Furthermore, the presence of some boxes may be mandatory in each file, while the presence of other boxes may be optional. Additionally, for some box types, it may be allowable to have more than one box present in a file. Thus, the ISO base media file format may be considered to specify a hierarchical structure of boxes. Each box of the ISO base media file may be identified by a four character code (4CC, fourCC). A four-character code may interchangeably be represented by a 32-bit unsigned integer (by assuming a certain conversion of characters to 8-bit values, a certain bit endianness, and a certain byte endianness). The header may provide information about the type and size of the box. An example containment hierarchy of ISOBMFF box structures is shown in Fig. 1.

Fig. 2 illustrates an example of a simplified file structure according to the ISO base media file format. As shown in Fig. 2, the file 90 may include the moov box 92 and the mdat box 94 and the moov box 92 may include tracks (trak 96 and trak 98) that correspond to video and audio, respectively.

The ISOBMFF is designed considering a variety of use cases; such uses cases may include (a) content creation (b) interchange (c) communication and (d) local and streamed presentation. The Dynamic Adaptive Streaming over HTTP (DASH) is an example of a communication format that uses ISOBMFF for its objectives. While DASH was originally meant as a format that is transported over HTTP (Hypertext Transfer Protocol), it has also found uses in 3GPP based protocols such as MBMS (multimedia broadcast/multicast service) and DVB (Digital Video Broadcasting) based IP (Internet Protocol) broadcasts. While some of these transmission protocols are bi-directional, some are uni-directional. Furthermore, some of these transmission protocols operate in a loss prone environment.

According to ISOBMFF, a file may include media data and metadata that may be enclosed in separate boxes. The media data may be provided in a media data 'mdat' box (also called MediaDataBox) or in an identified media data 'imda' box (also called IdentifiedMediaDataBox) and the movie 'moov' box (also called MovieBox) may be used to enclose the metadata for timed media. In some cases, for a file to be operable, the 'mdat' box or 'imda' box and 'moov' box must be present. The movie 'moov' box may include one or more tracks, and each track may reside in one corresponding track 'trak' box (also called TrackBox). A track may be, for example, one of the following types: media, hint, timed metadata. A media track refers to samples (which may also be referred to as media samples) formatted according to a media compression format (and its encapsulation to the ISO base media file format). A hint track refers to hint samples, containing cookbook instructions for constructing packets for transmission over an indicated communication protocol. The cookbook instructions may include guidance for packet header construction and may include packet payload construction. In the packet payload construction, data residing in other tracks or items may be referenced. As such, for example, data residing in other tracks or items may be indicated by a reference as to which piece of data in a particular track or item is instructed to be copied into a packet during the packet construction process. A timed metadata track may refer to samples describing referred media and/or hint samples. For the presentation of one media type, one media track may be selected. Samples of a track may be implicitly associated with sample numbers that may be incremented e.g. by 1 in the indicated decoding order of samples. The first sample in a track may be associated with sample number 1.

For certain box types ISOBMFF allows several boxes of the same four-character code to appear in the same level in the file hierarchy. For example, it is allowed to have several MediaDataBoxes in the root level of the file. Certain boxes may contain references or alike to other boxes e.g. using offsets, such as offsets relative to the beginning of a file. For example, a MovieBox contains references, such as chunk offsets, that may refer to content in MediaDataBox(es). When a file is partially received, it needs to be ensured that the integrity of such references is maintained in order to be able to parse the file correctly.

A transmission unit (Segment or Subsegment) in DASH may comprise one or more self-contained movie fragments, where a self-contained movie fragment may comprise a MovieFragmentBox and the MediaDataBox containing the media data described in the MovieFragmentBox). This design may incur a delay in the live content distribution, since the transmission unit can only be made available after all its media data has been coded. For example, a 1-second segment duration may cause roughly the same delay in the encoding and file encapsulation (plus the processing delay incurred in the encoding and encapsulation) to make the segments available.

File-level boxes may be made self-standing as well as independent of the box order and presence of other file-level boxes. Such a file may be referred to as a reorderable file. It may be indicated in the file and/or in a description of the file whether the file is reorderable. Said indicating may be performed by including a specific brand in the FileTypeBox indicating that the file is reorderable.

A box of a box type that is allowed to appear more than once in the same hierarchy level of the file, such as the root level, is tagged with an identifier that differentiates it from other boxes of the same type in the same file hierarchy level or such an identifier is derived from the contents of the box. Said tagging or derivation may be carried out only for those boxes or box types to which references from other box(es) may occur.

Since there may be many IdentifiedMediaDataBoxes contained in a file or in a referred file, there should be a way to recognize uniquely the IdentifiedMediaDataBox in which a sample is located. In an approach, a capability of recognizing an IdentifiedMediaDataBox out of many IdentifiedMediaDataBoxes is achieved by tagging each IdentifiedMediaDataBox with an identifier. There can be many methods to tag a IdentifiedMediaDataBox including but not limited to the following. As a first example, an identifier value, which may for example be an unsigned integer value of a certain bit count, may be affixed immediately after the box header of the box. According to another example a universally unique identifier (UUID) may be affixed after the box header of the box. In another example, an identifier, such as an MD5 checksum, is derived from a subset of the box contents or from the entire box and used to identify the box. As a yet another option, the reorderability may be constrained such that one or more box(es) of certain type immediately precede (or succeed) an IdentifiedMediaDataBox and contain the identifier of the IdentifiedMediaDataBox.

In accordance with an approach, the offsets, which may also be called addresses or pointers, indicated in the file are relative to the start of a box that contains the addressed data. In many cases, the addresses may be relative to the file-level box containing the addressed data. In an embodiment, offsets indicating samples are relative to the IdentifiedMediaDataBox containing the samples.

As the offsets may be included in a different file-level box than the data that the offsets are addressing, a box containing offsets may be associated with a box containing the addressed data. In an approach, the association may be implemented using an identifier, which may be called, for example, an imda_identifier, which is included in each of the IdentifiedMediaDataBoxes contained in the file or a referenced file. A track that may utilize data from any of the IdentifiedMediaDataBoxes, may need to refer the IdentifiedMediaDataBox using its identifier, and an offset calculated using the start of the IdentifiedMediaDataBox as its reference. The location of item data within a file may be provided by referring to a particular IdentifiedMediaDataBox using its identifier and an offset relative to the start of that particular IdentifiedMediaDataBox.

The capability of reorderable files may make file editing easier. For example, in a situation in which a file containing a first track is added with a second track, the offsets of samples of the first track need not be re-derived, when the media data of the second track is placed in different IdentifiedMediaDataBox(es) than those containing the media data of the first track.

In an approach, a URL fragment naming scheme is introduced to identify file-level boxes. A URL using that fragment naming scheme is resolved to a resource that consists of the file-level boxes identified by the URL fragment. As several boxes of the same name or type can exist in the file level, the URL fragment naming scheme also includes means to identify the file-level box from another file-level box of the same box type or name. For example, the above-described identifier of the IdentifiedMediaDataBox may be included in the URL fragment.

In an approach, a file and/or a description of the file or a representation includes information about the sequence of file-level boxes. The information may be regarded as a directory or a table of contents of the file. This information may be useful for example to inform a client about the download order required for an uninterrupted playback. The information may be such that URL fragments for file-level boxes can be generated based on the description. In an embodiment, identifiers of IdentifiedMediaDataBoxes may comprise a part of the information about the sequence of file-level boxes. In an embodiment, identifiers of IdentifiedMediaDataBoxes follow a numbering scheme that may be pre-defined e.g. in a standard or may be indicated in the information.

A partial file reception may be possible. In an approach, a receiver may be receiving or may have received file-level boxes. The receiver may have a-priori information or the receiver may conclude from indications in the file and/or in the description of the file that the file is reorderable. The receiver may write, into a received file, those file-level boxes that the receiver has correctly received. The receiver may provide the received file to a player and/or the player may retrieve the file from a memory, such as random access memory (RAM), flash memory, or solid state drive (SSD). In an approach, the player has a-priori information or concludes from indications in the file and/or in the description of the file that the file is reorderable. The player may parse the information of the sequence of file-level boxes. The player may parse the file-level boxes of the received file in the order indicated in the information of the sequence of file-level boxes. The player may identify missing boxes of the received file by comparing the available boxes in the received file to the information of the sequence of file-level boxes. The player may handle identified missing data, for example, by notifying the user and/or by requesting the missing data from a server, e.g. using the URL fragment(s) associated with the missing file-level box(es).

In order to request several resources, such as several boxes, with one request, bundles of URL fragments may be specified, in accordance with an example of the disclosure. For example, more than one URL fragment item can be included in the fragment part of the URL by including a specified delimiter, such as comma, between the URL fragment items. E.g. #box_id=ftyp,box_id=meta,box_id=mdat/398.

According to an example, a server resolves a URL with URL fragments that identify boxes as described above by including only those identified boxes in the resource or file that is provided as a response to the URL request.

In an embodiment, a player or alike obtains a MovieBox (e.g. through HTTP GET request with a URL containing fragment addressing the MovieBox). The player or alike parses the MovieBox and resolves the external data references from DataReferenceBox and the internal data references pointing to IdentifiedMediaDataBox(es) inside the file that also contains MovieBox. The player may obtain a file-level MetaBox, e.g. when it is known or concluded that the file contains image items. The player or alike determines which media data is needed for its purposes. For example, the player or alike may determine from the file-level MetaBox, which image item(s) are suitable for its purpose. In another example, the player or alike may determine from the MovieBox, which track(s) are suitable for its purpose. The player or alike then determines which external data references and/or IdentifiedMediaDataBox(es) are needed for the media data needed for its purposes. In an embodiment, a content encapsulator or alike includes in or associates with the DataReferenceBox, a URL fragment associated with the media data. In an embodiment, a player or alike parses a URL fragment associated with the media data from DataReferenceBox or an associated box, and uses the file name or URL obtained from the DataReferenceBox together with the URL fragment. In an embodiment, a player or alike fetches an external reference using a URL (as parsed from a DataReferenceBox) without a fragment part.

In accordance with an approach, low-latency live streaming may be implemented as follows. A streaming client may conclude, for example from the description of a representation, URL fragments of a MovieFragmentBox and a respective IdentifiedMediaDataBox. The streaming client may also use in the conclusion other file-level boxes such as the SegmentIndexBox. The streaming client may request the URL fragments of the MovieFragmentBox and the IdentifiedMediaDataBox separately, e.g. using parallel HTTP connections.

In an approach, a server may respond to a URL fragment request with chunked delivery of HTTP. The server may transmit first parts of the MovieFragmentBox and the respective IdentifiedMediaDataBox prior to transmitting second parts of the same MovieFragmentBox and the same IdentifiedMediaDataBox. The first parts may contain data up to the live edge, i.e. the data that is available so far. The first parts may be limited to be e.g. of integer number of TrackFragmentBoxes and the corresponding media data in IdentifiedMediaDataBox(es), i.e. avoiding to transmit partial TrackFragmentBoxes. The inherent latency related to encoding and file encapsulation may therefore be reduced and may be made as small as the "chunk" duration in chunked HTTP delivery.

In an approach, a media encapsulator is connected to the server. The media encapsulator may pack at least one coded media stream into a container file or a segment. The media encapsulator may provide the first parts of the MovieFragmentBox and the respective IdentifiedMediaDataBox to the server to be transmitted prior to finishing the encapsulation of the second parts of the same MovieFragmentBox and the same IdentifiedMediaDataBox.

The description, syntax, and semantics of the MediaDataBox in accordance with an approach are as follows:
Box Type : 'mdat'
Container: File
Mandatory: No
Quantity : Zero or more

```
     Syntax
        aligned(8) class MediaDataBox extends Box('mdat') {
                  bit(8) data[]; // until the end of the box
        }
```

} Semantics of the MediaDataBox is as follows, in accordance with an approach. The type indication (Box Type) reveals that the box is MediaDataBox. The parameter *data* is the contained media data.

The identified media data box (IdentifiedMediaDataBox) may have the same semantics as a MediaDataBox has but it additionally contains an identifier that is used in setting up data references to the contained media data. The identifier may for example be the first element contained by the identified media data box. The syntax of an identified media data box may be specified as follows, where imda_identifier is the identifier of the box. It is noted that while imda_identifier of type 32-bit unsigned integer is used in the syntax, other field lengths and other basic data types (e.g. string) are similarly possible.

```
 aligned(8) class IdentifiedMediaDataBox extends Box('imda') {
                 unsigned int(32) imda_identifier;
                 bit(8) data[]; // until the end of the box
 }
```

imda identifier shall differ from the imda identifier values of the other IdentifiedMediaDataBoxes of the file.

The 'trak' box contains samples, such as audio or video frames in a Sample Table box. The Sample Table box comprises e.g. all the time and data indexing of the media samples in a track. The Sample Table box is required to contain a Sample Description box. The Sample Description box includes an entry count field, specifying the number of sample entries included in the box. The Sample Description box is required to contain at least one sample entry. The sample entry format depends on the handler type for the track. Sample entries give detailed information about the coding type used and any initialization information needed for that coding.

For video tracks, a media sample may correspond to a coded picture or an access unit. A media track refers to samples (which may also be referred to as media samples) formatted according to a media compression format (and its encapsulation to the ISO base media file format). A hint track refers to hint samples, containing cookbook instructions for constructing packets for transmission over an indicated communication protocol. A timed metadata track may refer to samples describing referred media and/or hint samples.

Movie fragments may be used e.g. when recording content to ISO files e.g. in order to avoid losing data if a recording application crashes, runs out of memory space, or some other incident occurs. Without movie fragments, data loss may occur because the file format may require that all metadata, e.g., the movie box, be written in one contiguous area of the file. Furthermore, when recording a file, there may not be sufficient amount of memory space (e.g., random access memory RAM) to buffer a movie box for the size of the storage available, and re-computing the contents of a movie box when the movie is closed may be too slow. Moreover, movie fragments may enable simultaneous recording and playback of a file using a regular ISO file parser. Furthermore, a smaller duration of initial buffering may be required for progressive downloading, e.g., simultaneous reception and playback of a file when movie fragments are used and the initial movie box is smaller compared to a file with the same media content but structured without movie fragments.

The movie fragment feature may enable splitting the metadata that otherwise might reside in the movie box into multiple pieces. Each piece may correspond to a certain period of time of a track. In other words, the movie fragment feature may enable interleaving file metadata and media data. Consequently, the size of the movie box may be limited and the use cases mentioned above be realized.

When present, MovieExtendsBox ('mvex') is contained in a MovieBox. Its presence warns readers that there might be movie fragments in this file or stream. To know of all samples in the tracks, movie fragments are obtained and scanned in order, and their information logically added to the information in the MovieBox. MovieExtendsBox contains one TrackExtendsBox per track. TrackExtendsBox contains default values used by the movie fragments. Among the default values that can be given in TrackExtendsBox are: default sample description index (i.e. default sample entry index), default sample duration, default sample size, and default sample flags. Sample flags comprise dependency information, such as if the sample depends on other sample(s), if other sample(s) depend on the sample, and if the sample is a sync sample.

In some examples, the media samples for the movie fragments may reside in an mdat box. For the metadata of the movie fragments, however, a moof box may be provided. The moof box may include the information for a certain duration of playback time that would previously have been in the moov box. The moov box may still represent a valid movie on its own, but in addition, it may include an mvex box indicating that movie fragments will follow in the same file. The movie fragments may extend the presentation that is associated to the moov box in time.

Within the movie fragment there may be a set of track fragments, including anywhere from zero to a plurality per track. The track fragments may in turn include anywhere from zero to a plurality of track runs, each of which document is a contiguous run of samples for that track (and hence are similar to chunks). Within these structures, many fields are optional and can be defaulted. The metadata that may be included in the moof box may be limited to a subset of the metadata that may be included in a moov box and may be coded differently in some cases. Details regarding the boxes that can be included in a moof box may be found from the ISOBMFF specification.

TrackFragmentHeaderBox, contained in TrackFragmentBox, comprises sample description index that identifies which sample entry is in use in this track fragment.

Base data offset (base_data_offset in TrackFragmentHeaderBox) providing an explicit anchor for data offsets in track runs can be indicated. Alternatively, it can be indicated that the base data offsets (base _data_offset in TrackFragmentHeaderBox) for data references for the first track fragment are relative to the position of the first byte of the enclosing MovieFragmentBox and for subsequent track fragments the default base data offset is the end of the data defined by the preceding track fragment. Alternatively or additionally, it can be indicated for a track fragment that the base data offset (base _data_offset in TrackFragmentHeaderBox) is relative to the position of the first byte of the enclosing MovieFragmentBox.

A movie fragment comprises of one or more track fragments per track, each described by TrackFragmentBox. The TrackFragmentHeaderBox within the movie fragment sets up information and defaults used for track runs of samples.

Each movie fragment can add zero or more fragments to each track; and a track fragment can add zero or more contiguous runs of samples. The track fragment header sets up information and defaults used for those runs of samples.

The data origin that the base data offset is relative and the value of base_data_offset, when not present, are inferred as follows.

If the base-data-offset-present flag is equal to 0 and the default-base-is-moof flag is equal to 1, base_data_offset is inferred to be equal to 0 and is relative to the first byte of the MovieFragmentBox containing this box. Otherwise, if the base-data-offset-present flag is equal to 0 and the default-base-is-moof flag is equal to 0 and this TrackFragmentBox is not the first TrackFragmentBox of the same track in the containing MovieFragmentBox, the base_data_offset is inferred to be equal to 1 and is relative to the end of the data defined by the preceding track fragment of the same track. Otherwise, if the base-data-offset-present flag is equal to 0 and the default-base-is-moof flag is equal to 0 and the referenced data reference entry is DataEntryImdaBox or DataEntrySeqNumImdaBox, the base_data_offset is inferred to be equal to 0 and is relative to the first byte of the payload of the IdentifiedMediaDataBox corresponding to the data reference entry. Otherwise, if the referenced data reference entry is DataEntryImdaBox or DataEntrySeqNumImdaBox, the base data offset is relative to the first byte of the payload of the IdentifiedMediaDataBox corresponding to the data reference entry. Otherwise, the base data offset is relative to the file identified by the referenced data reference entry.

The syntax of the TrackFragmentHeader in ISOBMFF is as follows:

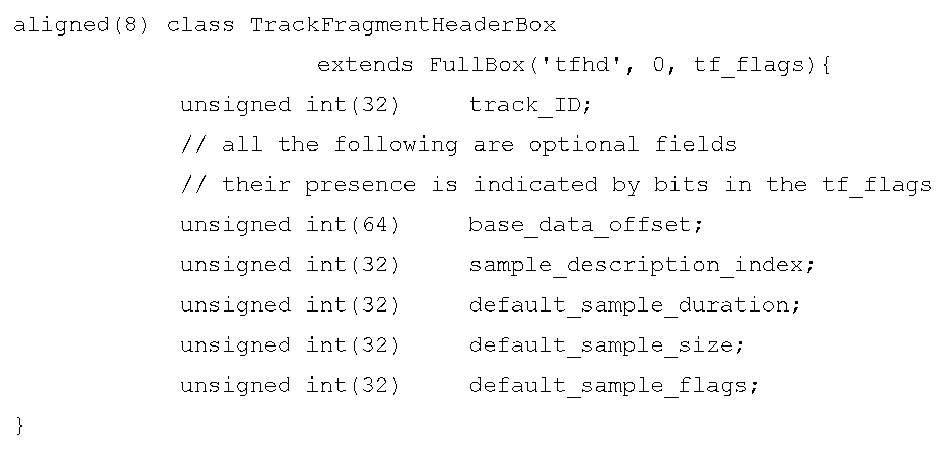

The following flags are defined in the tf_flags:
- 0x000001 base-data-offset-present: indicates the presence of the base-data-offset field. This provides an explicit anchor for the data offsets in each track run. If not provided and if the default-base-is-moof flag is not set, the base-data-offset for the first track in the movie fragment is the position of the first byte of the enclosing MovieFragmentBox, and for the second and subsequent track fragments, the default is the end of the data defined by the preceding track fragment. Fragments 'inheriting' their offset in this way must all use the same data-reference (i.e., the data for these tracks must be in the same file)
- 0x000002 sample-description-index-present: indicates the presence of this field, which over-rides, in this fragment, the default set up in the TrackExtendsBox.
- 0x000008 default-sample-duration-present
- 0x000010 default-sample-size-present
- 0x000020 default-sample-flags-present
- 0x010000 duration-is-empty: this indicates that the duration provided in either default-sample-duration, or by the default-sample-duration in the TrackExtendsBox, is empty, i.e. that there are no samples for this time interval. It is an error to make a presentation that has both edit lists in the MovieBox, and empty-duration fragments.
- 0x020000 default-base-is-moof: if base-data-offset-present is 1, this flag is ignored. If base-data-offset-present is zero, this indicates that the base-data-offset for this track fragment is the position of the first byte of the enclosing MovieFragmentBox. Support for the default-base-is-moof flag is required under the 'iso5' brand, and it shall not be used in brands or compatible brands earlier than 'iso5'.

A track fragment comprises of one or more track fragment runs (a.k.a. track runs), each described by TrackRunBox. A track run documents a contiguous set of samples for a track, which is also a contiguous range of bytes of media data.

The syntax of the TrackRunBox in ISOBMFF is as follows:

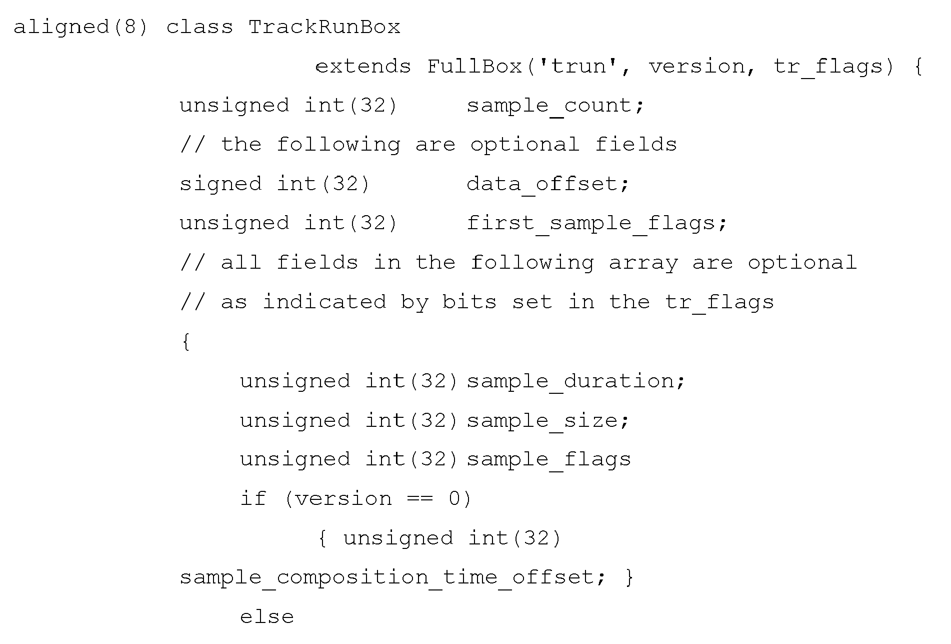

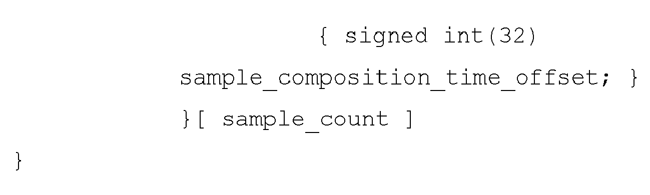

Semantics of the TrackRunBox is as follows, in accordance with an embodiment of this disclosure. The parameter sample_count indicates the number of samples being added in this run and also the number of rows in the following table (the rows can be empty), data offset is added to the implicit or explicit data_offset established in the track fragment header, first_sample_flags provides a set of flags for the first sample only of this run.

The presence of the optional fields is controlled by the values of tr _flags as follows:
- 0x000001 data-offset-present.
- 0x000004 first-sample-flags-present; this over-rides the default flags for the first sample only. This makes it possible to record a group of frames where the first is a key and the rest are difference frames, without supplying explicit flags for every sample. If this flag and field are used, sample-flags-present is required to be set equal to 0.
- 0x000100 sample-duration-present: indicates that each sample has its own duration, otherwise the default is used.
- 0x000200 sample-size-present: each sample has its own size, otherwise the default is used.
- 0x000400 sample-flags-present; each sample has its own flags, otherwise the default is used.
- 0x000800 sample-composition-time-offsets-present; each sample has a composition time offset (e.g. as used for I/P/B video in MPEG).

A self-contained movie fragment may be defined to consist of a moof box and an mdat box that are consecutive in the file order and where the mdat box contains the samples of the movie fragment (for which the moof box provides the metadata) and does not contain samples of any other movie fragment (i.e. any other moof box).

A media segment may comprise one or more self-contained movie fragments. A media segment may be used for delivery, such as streaming, e.g. in MPEG-DASH.

The track reference mechanism can be used to associate tracks with each other. The TrackReferenceBox includes box(es), each of which provides a reference from the containing track to a set of other tracks. These references are labeled through the box type (i.e. the four-character code of the box) of the contained box(es).

The ISO Base Media File Format contains three mechanisms for timed metadata that can be associated with particular samples: sample groups, timed metadata tracks, and sample auxiliary information. Derived specification may provide similar functionality with one or more of these three mechanisms.

A sample grouping in the ISO base media file format and its derivatives, such as the AVC file format and the SVC file format, may be defined as an assignment of each sample in a track to be a member of one sample group, based on a grouping criterion. A sample group in a sample grouping is not limited to being contiguous samples and may contain non-adjacent samples. As there may be more than one sample grouping for the samples in a track, each sample grouping may have a type field to indicate the type of grouping. Sample groupings may be represented by two linked data structures: (1) a SampleToGroupBox (sbgp box) represents the assignment of samples to sample groups; and (2) a SampleGroupDescriptionBox (sgpd box) contains a sample group entry for each sample group describing the properties of the group. There may be multiple instances of the SampleToGroupBox and SampleGroupDescriptionBox based on different grouping criteria. These may be distinguished by a type field used to indicate the type of grouping. SampleToGroupBox may comprise a grouping_type_parameter field that can be used e.g. to indicate a sub-type of the grouping.

In the following, some details of track data layout structures are provided. The ISOBMFF defines the DataInformationBox with the four-character code 'dinf' which contains objects that declare the location of the media information in a track.
Box Type: ' dinf '
Container: MediaInformationBox orMetaBox
Mandatory: Yes (required within MediaInformationBox) and No (optional within MetaBox)
Quantity: Exactly one

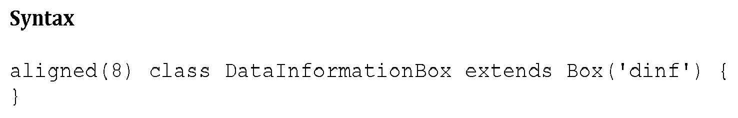

The data reference object contains a table of data references (normally URLs, uniform resource locators) that declare the location(s) of the media data used within the presentation. The data reference index in the sample description ties entries in this table to the samples in the track. A track may be split over several sources in this way.

If a flag is set indicating that the data is in the same file as this box, then no string, not even an empty one, shall be supplied in the entry field.

The entry_count in the DataReferenceBox shall be 1 or greater.

When a file that has data entries with the flag set indicating that the media data is in the same file, is split into segments for transport, the value of this flag does not change, as the file is (logically) reassembled after the transport operation.

The DataEntryImdaBox identifies the IdentifiedMediaDataBox containing the media data accessed through the data_reference_index corresponding to this DataEntryImdaBox. The DataEntryImdaBox contains the value of imda_identifier of the referred IdentifiedMediaDataBox. The media data offsets are relative to the first byte of the payload of the referred IdentifiedMediaDataBox. In other words, media data offset 0 points to the first byte of the payload of the referred IdentifiedMediaDataBox.

The DataEntrySeqNumImdaBox identifies the IdentifiedMediaDataBox containing the media data accessed through the data_reference_index corresponding to this DataEntrySeqNumImdaBox. When a data_reference_index included in a sample entry refers to DataEntrySeqNumImdaBox, each sample referring to the sample entry shall be contained in a movie fragment, and media data offset 0 points to the first byte of the payload of the IdentifiedMediaDataBox that has imda identifier equal to sequence _number of the MovieFragmentHeaderBox of the movie fragment containing the sample.
Box Type: 'dref'
Container: DataInformationBox
Mandatory: Yes
Quantity: Exactly one

Box Types: 'url ', 'urn '
Container: DataReferenceBox
Mandatory: Yes (at least one of 'url ' or 'urn ' shall be present)
Quantity: One or more

Box Type: 'imdt'
Container: DataReferenceBox
Mandatory: No.
Quantity: Zero or more.

Box Type: 'snim'
Container: DataReferenceBox
Mandatory: No.
Quantity: Zero or more.

```
 aligned(8) class DataEntryBaseBox(entry_type, bit(24) flags)
                 extends FullBox(entry_type, version = 0, flags) {
 }
                 aligned(8) class DataEntryUrlBox (bit(24) flags)
                 extends DataEntryBaseBox('url ', flags) {
                 utf8string location;
 }
                 aligned(8) class DataEntryUrnBox (bit(24) flags)
                 extends DataEntryBaseBox('urn ', flags) {
                 utf8string name;
                 utf8string location;
 }
                 aligned(8) class DataEntryImdaBox (bit(24) flags)
                 extends DataEntryBaseBox('imdt', flags) {
                 unsigned int(32) imda_ref_identifier;
 }
 aligned(8) class DataEntrySeqNumImdaBox (bit(24) flags)
                 extends DataEntryBaseBox ('snim', flags) {
 }
                 aligned(8) class DataReferenceBox
                 extends FullBox('dref', version = 0, 0) {
                 unsigned int(32) entry_count;
                 for (i=1; i <= entry_count; i++) {
                        DataEntryBaseBox(entry_type, entry_flags)
                 data_entry;
                 }
 }
```

The version is an integer that specifies the version of this box.

The entry_count is an integer that counts the actual entries.

The entry_flags is a 24-bit integer with flags; one flag is defined (x000001) which means that the media data is in the same file as the Box containing this data reference. If this flag is set, the DataEntryUrlBox shall be used and no string is present; the box terminates with the entry-flags field.

The data entry is an instance of a class derived from DataEntryBaseBox.

The name is a URN, and is required in a URN entry.

The location is a URL and is required in a URL entry and optional in a URN entry, where it gives a location to find the resource with the given name. The URL type should be of a service that delivers a file (e.g. URLs of type file, http, ftp etc.), and which services ideally also permit random access. Relative URLs are permissible and are relative to the file that contains this data reference.

The imda_ref_identifier identifies the IdentifiedMediaDataBox containing the media data accessed through the data_reference_index corresponding to this DataEntryImdaBox. The referred IdentifiedMediaDataBox contains imda identifier that is equal to imda_ref_identifier.

According to an approach, instead of estimating the size of the segment header based on the segment duration, identified media data boxes are used. An identifier value for the identified media data box of the segment is determined and that identifier value is provided as the data reference basis for the media data of the segment.

According to an approach, which may be applied independently of or together with other approaches, a template scheme for the identifier for the identified media data box is defined to be used as a data reference for sample data, e.g. in DataReferenceBox. The template scheme may be based on but is not limited to the movie fragment sequence number (such as the sequence_number field of the MovieFragmentHeaderBox) or track fragment decode time (such as the baseMediaDecodeTime field of TrackFragmentBaseMediaDecodeTimeBox). It needs to be understood that any identifier provided for a movie fragment or a track fragment may be appropriate for the template scheme in addition to or instead of those described above. In an example, the following syntax may be used for referencing an identified media data box using a template for deriving the identifier:

```
 aligned(8) class DataEntryTfdtBasedImdaBox (bit(24) flags)
                 extends FullBox('imdt', version = 0, flags) {
 }
```

The DataEntryTfdtBasedImdaBox identifies the IdentifiedMediaDataBox containing the media data accessed through the data_reference_index corresponding to this DataEntryTfdtBasedImdaBox. Media data offset 0 points to the first byte of the payload of the IdentifiedMediaDataBox that has imda identifier equal to baseMediaDecodeTime of the TrackFragmentBaseMediaDecodeTimeBox. 64-bit imda identifier values are used in order to carry the 64-bit value of baseMediaDecodeTime. If 32-bit baseMediaDecodeTime values are in use, the most-significant bits of the 64-bit imda_identifier may be set to 0. For self-contained movie fragments, the imda identifier of the IdentifiedMediaDataBox is required to be equal to the baseMediaDecodeTime of TrackFragmentBaseMediaDecodeTimeBox, when the referenced data reference entry is of type DataEntryTfdtBasedImdaBox.

Thus, the size of the MovieFragmentBox need not be known at the time of determining the base data offset(s) of the track(s) of the movie fragment, and consequently the child boxes of the MovieFragmentBox (e.g. TrackFragmentHeaderBox and TrackRunBoxes) can be authored "progressively" before all coded media data for the movie fragment is available. Moreover, the content encapsulator does not need to estimate the size of the segment header correctly and has the flexibility of some dynamic variability of segment durations.

A chunk offset table gives the index of each chunk into the containing file. There are two variants, permitting the use of 32-bit or 64-bit offsets. 64-bit offsets are useful when managing very large presentations. At most one of these variants will occur in any single instance of a sample table.

When the referenced data reference entry is not DataEntryImdaBox or DataEntrySeqNumImdaBox, offsets are file offsets, not the offset into any box within the file (e.g. MediaDataBox). This may permit referring to media data in files without any box structure. It may also mean that care must be taken when constructing a self-contained ISO file with its structure-data (MovieBox) at the front, as the size of the MovieBox will affect the chunk offsets to the media data.

When the referenced data reference entry is DataEntryImdaBox or DataEntrySeqNumImdaBox, offsets are relative to the first byte of the payload of the IdentifiedMediaDataBox corresponding to the data reference entry. This permits reordering file-level boxes and receiving a subset of file-level boxes but could require traversing the file-level boxes until the referenced IdentifiedMediaDataBox is found.

Syntax is as follows, according to an approach:

```
 aligned(8) class ChunkOffsetBox
                 extends FullBox('stco', version = 0, 0) {
                 unsigned int(32) entry_count;
                 for (i=1; i <= entry_count; i++) {
                        unsigned int(32) chunk_offset;
                 }
 }
 aligned(8) class ChunkLargeOffsetBox
                 extends FullBox('co64', version = 0, 0) {
                 unsigned int(32) entry_count;
                 for (i=1; i <= entry_count; i++) {
                        unsigned int(64) chunk_offset;
                 }
 }
```

Semantics of the above syntax is as follows:
- version is an integer that specifies the version of this box
- entry_count is an integer that gives the number of entries in the following table
- chunk_offset is a 32 or 64 bit integer that gives the offset of the start of a chunk. If the referenced data reference entry is DataEntryImdaBox or DataEntrySeqNumImdaBox, the value of chunk_offset is relative to the first byte of the payload of the IdentifiedMediaDataBox corresponding to the data reference entry. Otherwise, the value of chunk_offset is relative to the start of the containing media file.

An ItemLocationBox provides a directory of resources in this or other files by locating their container, their offset within that container, and their length. Using byte offsets and lengths enables common handling of this data, even by systems which do not understand the particular metadata system (handler) used. For example, a system might integrate all the externally referenced metadata resources into one place, re-adjusting offsets and references accordingly.

The ItemLocationBox starts with three or four values, specifying the size in bytes of the offset field, length field, base_offset field, and, in versions 1 and 2 of this box, the item_reference_index fields, respectively. These values shall be from the set {0, 4, 8}.

The construction_method field indicates the 'construction method' for the item:
i. file _offset: by absolute byte offsets into the file or the payload of IdentifiedMediaDataBox referenced by data_reference_index; (construction_method = = 0)
ii. idat offset: by byte offsets into the ItemDataBox in the same MetaBox; neither the data_reference_index nor item_reference_index fields are used; (construction_method = = 1)
iii. item _offset: by byte offset into the items indicated by the item_reference_index field, which is only used (currently) by this construction method. (construction method = = 2).

The item_reference_index is only used for the method item_offset; it indicates the 1-based index of the item reference with referenceType 'iloc' linked from this item. If index_size is 0, then the value 1 is implied; the value 0 is reserved.

Items may be stored fragmented into extents, e.g. to enable interleaving. An extent is a contiguous subset of the bytes of the resource; the resource is formed by concatenating the extents in the order specified in this box. If only one extent is used (extent count = 1) then either or both of the offset and length may be implied as follows:
- If the offset is not identified (the field has a length of zero), then the beginning of the source (offset 0) is implied.
- If the length is not specified, or specified as zero, then the entire length of the source is implied.

References into the same file as this structure-data, or items divided into more than one extent, should have an explicit offset and length, or use a MIME type requiring a different interpretation of the file, to avoid infinite recursion.

The size of the item is the sum of the extent lengths.

It should be noted that extents can be interleaved with the chunks defined by the sample tables of tracks.

The offsets are relative to a data origin. That origin is determined as follows:
1) when the MetaBox is in a Movie Fragment, and the construction_method specifies a file offset, and the data reference indicates 'same file', the data origin is the first byte of the enclosing MovieFragmentBox (as for the default-base-is-moof flag in the TrackFragmentHeaderBox);
2) when the construction_method specifies a file offset and the data reference indicates DataEntryImdaBox or DataEntrySeqNumImdaBox, the data origin is the first byte of the payload of the corresponding IdentifiedMediaDataBox;
3) in all other cases when the construction_method specifies a file offset, the data origin is the beginning of the file identified by the data reference;
4) when the construction_method specifies offsets into the ItemDataBox, the data origin is the beginning of data[] in the ItemDataBox;
5) when the data reference specifies another item, the data origin is the first byte of the concatenated data (of all the extents) of that item.

It should also be noted that there are offset calculations in other parts of this file format based on the beginning of a box header; in contrast, item data offsets are calculated relative to the box payload.

The data_reference_index may take the value 0, indicating a reference into the same file as this structure-data, or an index into the data references in the DataInformationBox in the containing MetaBox, with value 1 indicating the first entry in the data reference list.

Some referenced data may itself use offset/length techniques to address resources within it (e.g. an MP4 file might be 'included' in this way). Normally such offsets in the item itself are relative to the beginning of the containing file. The field 'base offset' provides an additional offset for offset calculations within that contained data. For example, if an MP4 file is included within a file formatted according to this document, then normally data-offsets within that MP4 section are relative to the beginning of the file; the base offset adds to those offsets.

If an item is constructed from other items, and those source items are protected, the offset and length information apply to the source items after they have been de-protected. That is, the target item data is formed from unprotected source data.

For maximum compatibility, version 0 of this box should be used in preference to version 1 with construction_method set equal to 0, or version 2 when possible. Similarly, version 2 of this box should only be used when support for large item_ID values (exceeding 65535) is required or expected to be required.

When construction_method 2 is used and one item needs to have an offset of 0 into another item, the base_offset field is set to 0.

Syntax is as follows, in accordance with an approach:

```
 aligned(8) class ItemLocationBox extends FullBox('iloc', version,
 0) {
                 unsigned int(4)offset_size;
                 unsigned int(4)length_size;
                 unsigned int(4)base_offset _size;
                 if ((version == 1) || (version == 2)) {
                        unsigned int(4) index _size;
                  } else {
                        unsigned int(4) reserved; }
                 if (version < 2) {
                        unsigned int(16) item_count;
                  } else if (version == 2) {
                        unsigned int(32) item_count; }
                 for (i=0; i<item count; i++) {
                        if (version < 2) {
                               unsigned int(16) item ID;
                        } else if (version == 2) {
                               unsigned int(32) item_ID; }
                        if ((version == 1) || (version == 2)) {
                               unsigned int(12) reserved = 0;
                               unsigned int(4) construction_method; }
                        unsigned int(16) data_reference_index;
                        unsigned int(base_offset_size*8) base_offset;
                        unsigned int(16) extent_count;
                        for (j=0; j<extent_count; j++) {
                                if (((version == 1) || (version == 2)) &&
 (index_size > 0)) {
                                       unsigned int(index_size*8)
                 item_reference_index;
                                }
                               unsigned int(offset_size*8) extent_offset;
                               unsigned int(length_size*8) extent_length;
                        }
                  }
 }
```

Semantics of the above syntax is:
- offset_size is taken from the set {0, 4, 8} and indicates the length in bytes of the offset field.
- length_size is taken from the set {0, 4, 8} and indicates the length in bytes of the length field.
- base_offset_size is taken from the set {0, 4, 8} and indicates the length in bytes of the base_offset field.
- index_size is taken from the set {0, 4, 8} and indicates the length in bytes of the item_reference_index field.
- item_count counts the number of resources in the following array.
- item_ID is an arbitrary integer 'name' for this resource which can be used to refer to it (e.g. in a URL).
- construction_method is taken from the set 0 (file), 1 (idat) or 2 (item)
- data-reference-index is either zero ('this file') or an index, with value 1 indicating the first entry, into the data references in the DataInformationBox.
- base_offset provides a base value for offset calculations within the referenced data. If base_offset_size is 0, base_offset takes the value 0, i.e. it is unused.
- extent count provides the count of the number of extents into which the resource is fragmented; it shall have the value 1 or greater
- item_reference_index provides an index as defined for the construction method
- extent_offset provides the absolute offset, in bytes from the data origin of the container, of this extent data. If offset_size is 0, extent_offset takes the value 0
- extent_length provides the absolute length in bytes of this metadata item extent. If length_size is 0, extent_length takes the value 0. If the value is 0, then length of the extent is the length of the entire referenced container.

In the following, some details of a 'relo' brand are described.

Requirements for files may be as follows.

Files having the 'relo' brand among compatible_brands of a TypeCombinationBox associated with the FileTypeBox shall be constrained as follows:

When construction_method equal to 0 (file_offset) is in use for an item in ItemLocationBox, data reference_index for the item shall point to a DataEntryImdaBox.

Each data_reference_index value in the sample entries of all tracks shall point to DataEntryImdaBox or DataEntrySeqNumImdaBox.

By including 'relo' in the compatible_brands of TypeCombinationBox associated with a TrackTypeBox or included in ExtendedTypeBox used as an item property, it may be possible to limit the scope of the constraints above to individual tracks or items.

A file having the 'relo' brand in the compatible_brands of a TypeCombinationBox associated with the FileTypeBox shall be accompanied by a BoxFileIndexBox that indexes the file and is provided separately from the file, for example using the fileindex MIME parameter with the file. The BoxFileIndexBox shall contain FrontPartBox including imda_identifier for each IdentifiedMediaDataBox. BoxFileIndexBox, FrontPartBox, and the fileindex MIME parameter are specified in ISO/IEC 23001-14.

Rather than traversing the top-level boxes of the file, parsers can use the BoxFileIndexBox to conclude the byte locations of each IdentifiedMediaDataBox referred to by the DataReferenceBox(es).

Requirements for readers may be as follows.

When a data reference refers to an IdentifiedMediaDataBox of the containing file but no IdentifiedMediaDataBox with imda identifier equal to the imda_ref_identifier given in the data reference is present in the file, readers shall omit the processing of the associated track or item. Furthermore, readers shall omit the processing of any tracks or items depending on such an associated track or item, for example through a track reference or an item reference.

When the 'relo' brand is in use, removal and addition of tracks and items can be done as described below.

When a track or item is added into a file complying with the 'relo' brand, its media data can be included in a new IdentifiedMediaDataBox. The MovieBox is appended with a new TrackBox or item information. The location offset information of the tracks or items that were already present in the file does not have to be updated, because the offsets are relative to the IdentifiedMediaDataBox that carries the respective media data. The location offset information of the added track or item is relative to the newly added IdentifiedMediaDataBox and may hence also be straightforward to compute. It may be easy to locate the amended MovieBox into the beginning of the file, because no location offsets depend on the size of the boxes preceding the IdentifiedMediaDataBoxes in the file order.

When a track or item is removed from a file complying with the 'relo' brand, it can be checked if no other media data than that of the removed track or item is present in the IdentifiedMediaDataBox. If so, the IdentifiedMediaDataBox can be removed without affecting the location offsets of the remaining tracks or items. Likewise, the TrackBox or the item information can be removed from the file without a need to re-compute the location offsets of the remaining tracks and items.

A file editor can maintain a file index that is a data structure containing the box types and either the sizes or byte ranges of all the file-level boxes and the imda_identifier values of all instances of IdentifiedMediaDataBox. The file editor should be able to output the file index data structure formatted as a BoxFileIndexBox.

In the following, some details of a partial image file reception will be described.

In the file writing, the following two steps may be carried out:

A file with 'relo' brand and with image items as specified in ISO/IEC 23008-12 (HEIF) is created, and each image item is located in its own IdentifiedMediaDataBox.

A BoxFileIndexBox for the HEIF file is created as a sequence of BoxIndexBoxes and has the following structure:

```
 BoxIndexBox {
                 indexed_box_type = 'ftyp';
                 indexed_box_size = X1;
 }
 BoxIndexBox {
                 indexed_box_type = 'etyp';
                 indexed_box_size = X2;
 }
 BoxIndexBox {
                 indexed_box_type = 'meta';
                 indexed_box_size = X3;
 }
 BoxIndexBox { indexed_box_type = 'imda';
                 indexed_box_size = X4;
                 FrontPartBox { box_content[4]; // containing
                 imda_identifier
                 }
 }
 ... // one BoxIndexBox per IdentifiedMediaDataBox
 BoxIndexBox {
                 indexed_box_type = 'imda';
                 indexed_box_size = X5;
                 FrontPartBox {
                       box_content[4]; // containing imda_identifier
                 }
 }
```

The file is made available for downloading e.g. in a web page, by referring to its HTTP URL and providing its MIME media type, including the fileindex parameter.

Reception of a subset of the image items may be enabled by the following operations. The file index is parsed from the fileindex parameter and the byte ranges for the FileTypeBox, the ExtendedTypeBox, and the root-level MetaBox are concluded from the file index. The FileTypeBox, the ExtendedTypeBox, and the root-level MetaBox with a byte range request are fetched. It may also be determined which image items are of interest based on the item information in the MetaBox. The byte ranges of the IdentifiedMediaDataBoxes containing the image items of interest are resolved from the file index, and the concluded byte ranges are fetched. A local file is created by concatenating all the fetched byte ranges, and when the reader expects a file index as input, the parsed file index is pruned by keeping only the top-level BoxIndexBoxes of the received top-level boxes. The resulting local file is a compliant HEIF file with the 'relo' brand.

According to an approach, a streaming manifest may be compiled indicating separate URLs for a segment header and a corresponding segment payload. The streaming manifest, such as DASH media presentation description (MPD), may provide the URL templates, or a URL template scheme to append the base URLs given in the MPD may be indicated to be applicable.

According to an approach, the streaming manifest may further indicate that the data in the segment payload is tightly packed and in decoding order. The segment payload may refer, for example, to the MediaDataBox. Packing tightly refers to all bytes of the segment payload belonging to the video bitstream, i.e. that the segment payload consists of a contiguous range of bytes of the video bitstream. Such indication may be provided e.g. as a supplemental property in DASH MPD. The video bitstream in the segment payload may be an encapsulated video bitstream. For example, the segment payload may consist of a contiguous set of samples of a video track of an ISOBMFF file.

The segments may be authored using per-sample metadata patterns. The size of the segment header is estimated based on the segment duration. The value of the offset applying to the first sample of the segment, which may be indicated, for example, as base_data_offset in TrackFragmentHeaderBox, is generated accordingly. An encapsulator may need to write FreeBox(es) at the end of the TrackFragmentBox, if the encoding is terminated suddenly.

An initial byte range of the segment header may be made available for HTTP chunked transfer encoding by a server entity. The initial byte range is indicative of the pattern of per-sample metadata that applies to the segment payload. The initial byte range excludes at least some of the sample sizes. The initial byte range may for example comprise an initial part of a MovieFragmentBox, up to but excluding a sample size list in a TrackRunBox. Segment payload may be made available for HTTP chunked transfer encoding for example for each hierarchical structure of pictures.

Chunked HTTP delivery enables servers to respond to an HTTP GET request in multiple parts. However, chunked HTTP delivery does not remove the inherent encoding and encapsulation delay caused by creating self-standing movie fragments. Chunked HTTP delivery is specified in IETF RFC 7230.

Hypertext Transfer Protocol (HTTP) has been widely used for the delivery of real-time multimedia content over the Internet, such as in video streaming applications. One solution for adaptive streaming over HTTP is MPEG DASH (ISO/IEC 23009-1: "Dynamic adaptive streaming over HTTP (DASH)-Part 1: Media presentation description and segment formats," International Standard, 2nd Edition, 2014). MPEG DASH and 3GP-DASH are technically close to each other and may therefore be collectively referred to as DASH. In DASH, the multimedia content may be stored on an HTTP server and may be delivered using HTTP. The content may be stored on the server in two parts: an MPD which describes a manifest of the available content, its various alternatives, their URL addresses, and other characteristics; and segments, which contain the actual multimedia bitstreams in the form of chunks, in a single or multiple files. The MPD provides the necessary information for clients to establish a dynamic adaptive streaming over HTTP. The MPD contains information describing a media presentation, such as an HTTP- URL of each segment to allow a GET Segment request to be made. To play the content, a DASH client may obtain the MPD, e.g., by using HTTP, email, thumb drive, broadcast, or other transport methods. By parsing the MPD, the DASH client may become aware of the program timing, media-content availability, media types, resolutions, minimum and maximum bandwidths, and the existence of various encoded alternatives of multimedia components, accessibility features and required digital rights management (DRM), media-component locations on the network, and other content characteristics. Using this information, the DASH client may select the appropriate encoded alternative and start streaming the content by fetching the segments using, e.g., HTTP GET requests. After appropriate buffering to allow for network throughput variations, the client may continue fetching the subsequent segments and also monitor the network bandwidth fluctuations. The client may decide how to adapt to the available bandwidth by fetching segments of different alternatives (with lower or higher bitrates) to maintain an adequate buffer.

In DASH, a hierarchical data model is used to structure a media presentation. A media presentation consists of a sequence of one or more Periods, each Period contains one or more Groups, each Group contains one or more Adaptation Sets, each Adaptation Set contains one or more Representations, each Representation consists of one or more Segments. A Group may be defined as a collection of Adaptation Sets that are not expected to be presented simultaneously. An Adaptation Set may be defined as a set of interchangeable encoded versions of one or several media content components. A Representation is one of the alternative choices of the media content or a subset thereof typically differing by the encoding choice, such as by bitrate, resolution, language, codec, etc. The Segment, or Media Segment, contains a certain duration of media data, and metadata to decode and present the included media content. A Segment is identified by a uniform resource identifier (URI) and can typically be requested by a HTTP GET request. A Segment may be defined as a unit of data associated with an HTTP-URL and optionally a byte range that are specified by an MPD. An Index Segment may be defined as a Segment that primarily contains indexing information for Media Segments. The availability of Index Segments is identical to the availability to the Media Segments to which the Index Segments correspond.

A uniform resource identifier (URI) may be defined as a string of characters used to identify a name of a resource. Such identification enables interaction with representations of the resource over a network, using specific protocols. A URI is defined through a scheme specifying a concrete syntax and associated protocol for the URI. The uniform resource locator (URL) and the uniform resource name (URN) are forms of URI. A URL may be defined as a URI that identifies a web resource and specifies the means of acting upon or obtaining the representation of the resource, specifying both its primary access mechanism and network location. A URN may be defined as a URI that identifies a resource by name in a particular namespace. A URN may be used for identifying a resource without implying its location or how to access it.

URL fragment identifiers (which may also be referred to as URL forms) may be specified for a particular content type to access a part of the resource, such as a file, indicated by the base part of the URL (without the fragment identifier). URL fragment identifiers may be identified for example by a hash ('#') character within the URL. For the ISOBMFF, it may be specified that URL fragments "#X" refer to a track with track _ID equal to X, "#item_ID=" and "#item_name=" refer to file level meta box(es), "#/item_ID=" and "#/item_name=" refer to the meta box(es) in the Movie box, and "#track_ID=X/item_ID=" and "#track_ID=X/item_name=" refer to meta boxes in the track with track_ID equal to X, including the meta boxes potentially found in movie fragments.

A DASH service may be provided as on-demand service or live service. In the on-demand service the MPD is static and all Segments of a Media Presentation are already available when a content provider publishes an MPD. In the live service, however, the MPD may be static or dynamic depending on the Segment URLs construction method employed by a MPD and Segments are created continuously as the content is produced and published to DASH clients by a content provider. Segment URLs construction method may either be template-based Segment URLs construction method or the Segment list generation method. In the template-based Segment URLs construction method, a DASH client is able to construct Segment URLs without updating an MPD before requesting a Segment. In the Segment list generation method, a DASH client has to periodically download the updated MPDs to get Segment URLs. For live service, hence, the template-based Segment URLs construction method may be superior to the Segment list generation method.

An Initialization Segment may be defined as a Segment containing metadata that is necessary to present the media streams encapsulated in Media Segments. In ISOBMFF based segment formats, an Initialization Segment may comprise the Movie Box ('moov') which might not include metadata for any samples, that is, any metadata for samples is provided in 'moof' boxes.

A Media Segment contains certain duration of media data for playback at a normal speed, such duration is referred as Media Segment duration or Segment duration. The content producer or service provider may select the Segment duration according to the desired characteristics of the service. For example, a relatively short Segment duration may be used in a live service to achieve a short end-to-end latency. The reason is that Segment duration is typically a lower bound on the end-to-end latency perceived by a DASH client since a Segment is a discrete unit of generating media data for DASH. Content generation is typically done in such a manner that a whole Segment of media data is made available for a server. Furthermore, many client implementations use a Segment as the unit for GET requests. Thus, in typical arrangements for live services a Segment can be requested by a DASH client only when the whole duration of Media Segment is available as well as encoded and encapsulated into a Segment. For on-demand service, different strategies of selecting Segment duration may be used.

An end-to-end system for DASH may be described as follows. The media content is provided by an origin server, which may be a conventional web (HTTP) server. The origin server may be connected with a Content Delivery Network (CDN) over which the streamed content is delivered to and stored in edge servers. The MPD allows signaling of multiple base URLs for the content, which can be used to announce the availability of the content in different edge servers. Alternatively, the content server may be directly connected to the Internet. Web proxies may reside on the path of routing the HTTP traffic between the DASH clients and the origin or edge server from which the content is requested. Web proxies cache HTTP messages and hence can serve clients' requests with the cached content. They are commonly used by network service providers, since they reduce the required network bandwidth from the proxy towards origin or edge servers. For end-users HTTP caching provides shorter latency. DASH clients are connected to the Internet through an access network, such as a mobile cellular network. The mobile network may comprise mobile edge servers or mobile edge cloud, operating similarly to a CDN edge server and/or web proxy.

When using tile/sub-picture tracks as described above for encapsulating the media data, the byte count of file format samples of tile/sub-picture tracks can be very small, just few tens of bytes, when a fine tile grid is used. The overhead of file format metadata for movie fragments, most notably TrackRunBox can be significant. For example, when hierarchical inter prediction is used in video tracks, both sample_size and sample_composition_time_offset are present in TrackRunBox, and thus the TrackRunBox occupies at least 8 bytes per sample.

Extractor tracks are used to merge sub-picture tracks in a manner that the resulting bitstream is conforming to the underlying video format (e.g. H.264/AVC or HEVC). The sample size in extractor tracks can be significant, e.g. 10 to 20 bytes per extracted sub-picture track, given that the byte count of file format samples of sub-picture tracks can be very small, just few tens of bytes, when a fine tile grid is used.

A sample in an extractor track that merges sub-picture tracks typically contains the following:
- NAL unit header of the extractor: 2 bytes
- Per each extracted tile/sub-picture track: in-line constructor for the rewritten slice header
- Per each extracted tile/sub-picture track: sample-constructor, which may be e.g. 7 bytes for 2-byte length and offset fields

A target in low-latency live streaming is to minimize the end-to-end delay from capture to display. In the encoding end, all pictures of a movie fragment have to be encoded before the MovieFragmentBox can be authored. Thus, there is an inherent delay equal to the movie fragment duration in the encoding end. The movie fragment duration is usually the same as the segment duration in DASH, i.e., a usual strategy is to have exactly one movie fragment per segment. It is allowed to create multiple movie fragments per segment, but that comes with a byte count overhead cost.

The following boxes are present at each self-contained movie fragment:
- MovieFragmentBox: 8 bytes
- MovieFragmentHeaderBox: 16 bytes
- TrackFragmentBox: 8 bytes
- TrackFragmentHeaderBox: 16 to 40 bytes
- One or more TrackRunBox(es), varying size of greater than or equal to 16 bytes
- Zero or more SampleGroupDesctiptionBox(es)
- Zero or more SampleToGroupBox(es)
- One or more MediaDataBox(es), each with 8-byte box header

An initial byte range of the segment header may be made available for HTTP chunked transfer encoding by a server entity. The initial byte range is indicative of the pattern of per-sample metadata that applies to the segment payload. The initial byte range excludes at least some of the sample sizes. The initial byte range may for example comprise an initial part of a MovieFragmentBox, up to but excluding a sample size list in a TrackRunBox. Segment payload may be made available for HTTP chunked transfer encoding for example for each hierarchical structure of pictures.

The server or the server entity in various embodiments may for example be but is not limited to one of the following:
- An origin server;
- An edge server of a content delivery network (CDN);
- A proxy server;
- A mobile edge cloud, e.g. operating in a 5G mobile network;
- A media gateway;
- A home server;
- A processing device, such as a personal computer or a game console, which may be connected to a viewing device, such as a head-mounted display.

Low latency players may use parallel HTTP connections to fetch the segment header and segment payload separately. Legacy players may use conventional URLs to fetch full segments with header and payload.

When segment headers and payloads are requested separately, the low-latency server may operate as follows:
- The server uses HTTP chunked transfer encoding for the segment header part by sending initial byte range in one chunk and sending the remainder of the TrackRunBox only when the movie fragment is finalized.
- The server uses HTTP chunked transfer encoding for the segment payload on e.g. structure of pictures basis.

The MPD may provide information indicative of URLs that can be used to obtain Index Segments. Some examples of the information are presented in the following.

A RepresentationIndex element within a SegmentBase element specifies the URL including a possible byte range for the Representation Index Segment.

A SegmentList element comprises a number of SegmentURL elements, which may comprise a URL for a Media Segment (in the @media attribute), a byte range within the resource identified by the URL of the @media attribute, a URL for an Index Segment (in the @index attribute), and/or a byte range within the resource identified by the URL of the @index attribute. The URL in the @media attribute in combination with the @mediaRange attribute, if present, specifies the HTTP-URL for the Media Segment. The URL in the @index attribute in combination with the @indexRange attribute, if present, specifies the HTTP-URL for the Index Segment.

The @index attribute of a SegmentTemplate element specifies the template to create the Index Segment List. A segment template comprises a character string from which a list of Segments (identified by their URLs) can be derived. A segment template may comprise specific identifiers that are substituted by dynamic values assigned to Segments, to create a list of Segments.

Each Segment may have assigned Segment Index information that may be provided in an explicitly declared Index Segment. The presence of explicit Index Segment information may be indicated, for example, by any of the following:
- by the presence of one RepresentationIndex element providing the Segment Index for the entire Representation, or
- by the presence of at least one of the two attributes @index and @indexRange in the SegmentList.SegmentURL element, or
- by the presence of SegmentTemplate@index attribute.

The @indexRange attribute may also be used to provide the byte range for an index within a Media Segment in instances in which this is allowed by the Media Segment format. In this case the @index attribute is not present and the range specified lies completely within any byte range specified for the Media Segment.

Conventionally, DASH can be used in two operation modes, namely, live and on-demand. For both operation modes the DASH standard provides profiles that specify constraints on the MPD and segment formats. In the live profiles, the MPD contains sufficient information for requesting Media Segments, and the client can adapt the streaming bitrate by selecting the Representations from which the Media Segments are received. In the on-demand profiles, in addition to the information in the MPD, the client typically obtains a segment index from each Media Segment of each Representation. Many times, there is only a single Media Segment for the entire Representation. The segment index comprises SegmentIndexBoxes, which describe Subsegments included in the Media Segment. The client selects the Representation(s) from which Subsegments are fetched and requests them using byte range requests.

A Segment may further be partitioned into Subsegments, e.g., to enable downloading segments in multiple parts. Subsegments may be required to contain complete access units. Subsegments may be indexed by Segment Index box (a.k.a. SegmentIndexBox or 'sidx' box), which contains information to map presentation time range and byte range for each Subsegment. The Segment Index box may also describe subsegments and stream access points in the segment by signaling their durations and byte offsets. A DASH client may use the information obtained from Segment Index box(es) to make a HTTP GET request for a specific Subsegment using a byte range HTTP request. If a relatively long Segment duration is used, then Subsegments may be used to keep the size of HTTP responses reasonable and flexible for bitrate adaptation. The indexing information of a segment may be put in the single box at the beginning of that segment or spread among many indexing boxes in the segment. Different methods of spreading are possible, such as hierarchical, daisy chain, and hybrid. This technique may avoid adding a large box at the beginning of the segment and therefore may prevent a possible initial download delay.

SegmentIndexBox may have the following syntax:

```
 aligned(8) class SegmentIndexBox extends FullBox('sidx', version,
 0) {
                 unsigned int(32) reference_ID;
                 unsigned int(32) timescale;
                 if (version==0) {
                               unsigned int(32) earliest_presentation_time;
                               unsigned int(32) first_offset; }
                        else {
                               unsigned int(64) earliest_presentation_time;
                               unsigned int(64) first_offset; }
                 unsigned int(16) reserved = 0;
                 unsigned int(16) reference_count;
                 for(i=1; i <= reference_count; i++)
                  {
                       bit (1) reference_type;
                        unsigned int(31) referenced_size;
                        unsigned int(32) subsegment_duration;
                       bit(1) starts_with_SAP;
                        unsigned int(3) SAP_type;
                        unsigned int(28) SAP_delta_time;
                  }
 }
```

The semantics of some syntax elements of SegmentIndexBox may be specified as follows:
- reference_type: when set to 1 indicates that the reference is to a SegmentIndexBox; otherwise the reference is to media content (e.g., in the case of files based on ISOBMFF, reference_type equal to 0 may be specified to point to a MovieFragmentBox); if a separate index segment is used, then entries with reference type 1 are in the index segment, and entries with reference type 0 are in the media segment;
- referenced_size: the distance in bytes from the first byte of the referenced item to the first byte of the next referenced item, or in the case of the last entry, the end of the referenced material.

The term Segment Index may be defined as a compact index of the time range to byte range mapping within a Media Segment separately from the MPD. A Segment Index may comprise one or more SegmentIndexBoxes.

The notation (Sub)segment refers to either a Segment or a Subsegment. If Segment Index boxes are not present, the notation (Sub)segment refers to a Segment. If Segment Index boxes are present, the notation (Sub)segment may refer to a Segment or a Subsegment, e.g., depending on whether the client issues requests on a Segment or Subsegment basis.

Each media segment may be assigned a unique URL (possibly with byte range), an index, and explicit or implicit start time and duration. Each media segment may contain at least one stream access point, which is a random access or switch-to point in the media stream where decoding can start using only data from that point forward.

To enable downloading segments in multiple parts, a method of signaling subsegments using a segment index box may be utilized. This box describes subsegments and stream access points in the segment by signaling their durations and byte offsets. The DASH client may use the indexing information to request subsegments using partial HTTP GET requests. The indexing information of a segment may be put in the single box at the beginning of that segment, or spread among many indexing boxes in the segment. Different methods of spreading are possible, such as hierarchical, daisy chain, and hybrid. This technique may avoid adding a large box at the beginning of the segment and therefore may prevent a possible initial download delay.

MPEG-DASH defines segment-container formats for both ISO Base Media File Format and MPEG-2 Transport Streams. Other specifications may specify segment formats based on other container formats. For example, a segment format based on Matroska container file format has been proposed and may be summarized as follows. When Matroska files are carried as DASH segments or alike, the association of DASH units and Matroska units may be specified as follows. A subsegment (of DASH) may be are defined as one or more consecutive Clusters of Matroska-encapsulated content. An Initialization Segment of DASH may be required to comprise the EBML header, Segment header (of Matroska), Segment Information (of Matroska) and Tracks, and may optionally comprise other level 1 elements and padding. A Segment Index of DASH may comprise a Cues Element of Matroska.

DASH supports rate adaptation by dynamically requesting Media Segments and/or Subsegments from different Representations within an Adaptation Set to match varying network bandwidth. When a DASH client switches up/down Representation, coding dependencies within Representation may need to be taken into account. In media decoding, a Representation switch may only happen at a random access point (RAP), which may be used in video coding techniques such as H.264/AVC. In order to avoid requesting and transmitting of media data that will not be decoded, RAPs may be aligned at the beginning of Media Segments and/or Subsegments, and the MPD and/or the segment index box may be used to indicate alignment of RAPs at the beginning of Media Segments and/or Subsegments. Consequently, DASH clients may be able to conclude which Segments and/or Subsegments to request so that when Representation switching is performed the first Segment and/or Subsegment of a destination Representation starts with a RAP and the Segments and/or Subsegments of the source and destination Representation are aligned (time-wise). In DASH, a more general concept named Stream Access Point (SAP) is introduced to provide a codec-independent solution for accessing a Representation and switching between Representations. In DASH, a SAP is specified as a position in a Representation that enables playback of a media stream to be started using only the information contained in Representation data starting from that position onwards (preceded by initialising data in the Initialisation Segment, if any). Hence, Representation switching can be performed in SAP.

Streaming systems similar to MPEG-DASH include for example HTTP Live Streaming (a.k.a. HLS), specified in the IETF Internet Draft draft-pantos-http-live-streaming-13 (and other versions of the same Internet Draft). As a manifest format corresponding to the MPD, HLS uses an extended M3U format. M3U is a file format for multimedia playlists, originally developed for audio files. An M3U Playlist is a text file that consists of individual lines, and each line is a URI, blank, or starts with the character '#' indicating a tag or a comment. A URI line identifies a media segment or a Playlist file. Tags begin with #EXT. The HLS specification specifies a number of tags, which may be regarded as key-value pairs. The value part of tags may comprise an attribute list, which is a comma-separated list of attribute-value pairs, where an attribute-value pair may be considered to have the syntax AttributeName=AttributeValue. Hence, tags of HLS M3U8 files may be considered similar to Elements in MPD or XML, and attributes of HLS M3U8 files may be considered similar to Attributes in MPD or XML. Media segments in HLS are formatted according to the MPEG-2 Transport Stream and contain a single MPEG-2 Program. Each media segment is recommended to start with a Program Association Table (PAT) and a Program Map Table (PMT).

A hypertext mark-up language version 5.1 (HTML 5.1) supports a number of use cases in which the content author may use multiple image resources that a user agent (e.g. a web browser) can choose from. For example, different users might have different environmental characteristics; authors might want to show the same image content but with different rendered size and/or using different image formats; and/or authors might want to show different image content.

In the following, some non-limiting examples of the environmental characteristics will be shortly discussed. The user device's physical screen size might be different from one device to another. As an example, a screen of a mobile phone might be smaller than a screen of a laptop computer. This difference may only be relevant when an image's rendered size depends on a viewport size. The user device's screen pixel density might also be different in different devices. Different devices may further have different pixel densities regardless of their physical screen size. For example, a screen of one mobile phone might have more physical pixels per inch compared to a screen of another mobile phone. There may also be differences in zoom levels between devices, or the zoom level might change for a single user over time. As an example, a user might zoom in to a particular image to be able to get a more detailed look. The zoom level and the screen pixel density may both affect the number of physical screen pixels per CSS pixel (cascading style sheet - language). This ratio may be referred to as a device-pixel-ratio. Furthermore, screen orientation might be different in different devices, or might change for a single user over time. As an example, a tablet computer can be held upright or rotated 90 degrees, so that the screen is either "portrait" or "landscape". There may also be differences in users' network speed, network latency and bandwidth cost, or might change for a single user over time. A user might be using on a fast, low-latency and constant-cost connection while at work, on a slow, low-latency and constant-cost connection while at home, and on a variable-speed, high-latency and variable-cost connection anywhere else.

In some cases, such as in tile-based viewport-dependent 360° video streaming, the number of Representations can be relatively high, even up to hundreds of Representations, since the content may be partitioned into several tens of tiles and may be coded with several resolutions and bitrates. Moreover, the duration of (Sub)segment may be inconveniently long to update the viewport quickly with high-quality tiles after a viewing orientation change. Thus, a more fine-grained request than (Sub)segments could be desirable. To enable fine-grained requests, even down to a single picture interval, and to obtain the indexing data conveniently for all tiles, the draft 2nd Edition of Omnidirectional Media Format (a.k.a. OMAF v2, ISO/IEC 23090-2) includes new segment formats: Tile Index Segment, and Tile Data Segment.

A Tile Index Segment is logically an Index Segment as specified in the DASH standard. It may contain SegmentIndexBoxes for the Base Track and all the referenced Tile Tracks and is required to include MovieFragmentBoxes for the Base Track and all the referenced Tile Tracks. MovieFragmentBoxes indicate the byte ranges on a sample basis. Consequently, a client can choose to request content on smaller units than (Sub)segments.

The Tile Data Segments are Media Segments containing only media data enclosed in IdentifiedMediaDataBoxes ('imda'). The byte offsets contained in MovieFragmentBoxes ('moof) are relative to the start of IdentifiedMediaDataBoxes. Thus, MovieFragmentBoxes and media data can reside in separate resources, unlike in conventional DASH segment formats where the byte offsets to the media data are relative to the MovieFragmentBox. The box payload of each IdentifiedMediaDataBox starts with a sequence number that is also contained in the corresponding MovieFragmentBox, thus enabling to pair a MovieFragmentBox with the corresponding IdentifiedMediaDataBox.

In accordance with an example of the disclosure, a data structure related to data entries (a DataEntryBox), which is called as a DataEntryTrafSeqNumImdaBox ('tnim') in accordance with an embodiment of the disclosure, is defined. This structure may be similar to the DataEntrySeqNumImdaBox 'snim'. The DataEntryTrafSeqNumImdaBox refers to a track fragment within a movie fragment box 'moof'.

The data structure DataEntryTrafSeqNumImdaBox identifies the identified media data box (IdentifiedMediaDataBox) containing the media data accessed through the data reference_index corresponding to this data structure DataEntryTrafSeqNumImdaBox.

When an index data_reference_index included in a sample entry refers to a track fragment box DataEntryTrafSeqNumImdaBox, each sample referring to the sample entry shall be contained in a track fragment, and media data offset 0 points to the first byte of the payload of the identified media data box (IdentifiedMediaDataBox) that has an imda identifier equal to a traf identifier of the track fragment header box (TrackFragmentHeaderBox) of the track fragment containing the sample.

In an alternative example of the disclosure, the IdentifiedMediaDataBox containing the media data has imda identifier equal to traf identifier of the TrackFragmentHeaderIdentifierBox of the Track fragment containing the sample.

The data entry box DataEntryTrafSeqNumImdaBox may have the following syntax, in accordance with an example of the disclosure:

```
 aligned(8) class DataEntryTrafSeqNumImdaBox (bit(24) flags)
                 extends FullBox('tnim', version = 0, flags) {
 }
```

**In** an example of the disclosure, the track fragment header box is extended to include a unique identifier called the traf_identifier. Hence, the syntax of the TrackFragmentHeaderBox may be as follows:

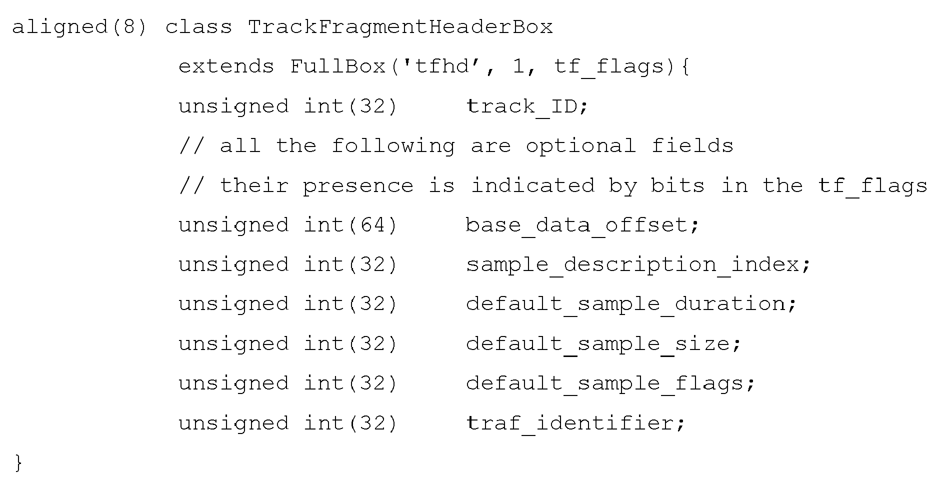

The traf identifier is a unique number which is different than the sequence_number of the MovieFragmentHeaderBox.

In an alternative example of the disclosure, a companion box is defined for the TrackFragmentHeaderBox called the TrackFragmentHeaderIdentifierBox as below.

```
 aligned(8) class TrackFragmentHeaderIdentifierBox
                        extends FullBox('tfhi', 0, flags){
                         unsigned int(32) traf_identifier;
 // should not clash with the moof's seq_num so that
 ida_identifiers would not have overlapping numbers
 // profile or brand can provide additional rules for
 nonoverlapping seq_num and traf_identifiers.
 }
```

In yet another alternative example of the disclosure, a data reference box is defined. This data reference box causes an imda_identifier to be generated by combining a movie fragment sequence number and a track identifier. In other words, the imda_identifier is a combination of movie fragment sequence number and track identifier. It may be required that this combination is unique among all movie fragments and tracks of the file.

The DataEntryTrackIdSeqNumImdaBox identifies the IdentifiedMediaDataBox containing the media data accessed through the data_reference_index corresponding to this DataEntryTrackIdSeqNumImdaBox. When a data reference index included in a sample entry refers to DataEntryTrackIdSeqNumImdaBox, each sample referring to the sample entry is contained in a movie fragment, and media data offset 0 points to the first byte of the payload of the IdentifiedMediaDataBox that has imda_identifier equal to track_ID << (32 - num_track_id_bits) + sequence number, where '<<' is a bit-wise left shift operation, track_ID is from the TrackFragmentHeaderBox of the track fragment containing the sample and sequence_number is from the MovieFragmentHeaderBox of the movie fragment containing the sample. The notation '<<' above indicates that bits of the value of the track_ID are shifted to the left as many times as the result of the equation 32 - num_track_id_bits indicates. Each shift of the bits to the left corresponds a multiplication by 2.

```
 aligned(8) class DataEntryTrackIdSeqNumImdaBox (bit(24) flags)
                 extends FullBox('tsni', version = 0, flags) {
                 bit(3) reserved = 0;
                 unsigned int(5) num_track_id_bits;
 }
```

In an embodiment, when the referenced data reference entry is not DataEntryTrafSeqNumImdaBox or DataEntryTrackIdSeqNumImdaBox, offsets are file offsets, not the offset into any box within the file (e.g. MediaDataBox). This permits referring to media data in files without any box structure. It does also mean that care must be taken when constructing a self-contained ISO file with its structure-data (MovieBox) at the front, as the size of the MovieBox will affect the chunk offsets to the media data.

In an embodiment, when the referenced data reference entry is DataEntryTrafSeqNumImdaBox or DataEntryTrackIdSeqNumImdaBox, offsets are relative to the first byte of the payload of the IdentifiedMediaDataBox corresponding to the data reference entry. This permits reordering file-level boxes and receiving a subset of file-level boxes but could require traversing the file-level boxes until the referenced IdentifiedMediaDataBox is found.

In an embodiment, the chunk_offset parameter of the ChunkOffsetBox is a 32 or 64 bit integer that gives the offset of the start of a chunk. If the referenced data reference entry is DataEntryTrafSeqNumImdaBox or DataEntryTrackIdSeqNumImdaBox, the value of chunk_offset is relative to the first byte of the payload of the IdentifiedMediaDataBox corresponding to the data reference entry. Otherwise, the value of chunk_offset is relative to the start of the containing media file.

As an alternative example of the disclosure, a data structure 'imtt' is defined which contains an array of imda_ref_identifiers stored in the data reference box of each media information box of each track.

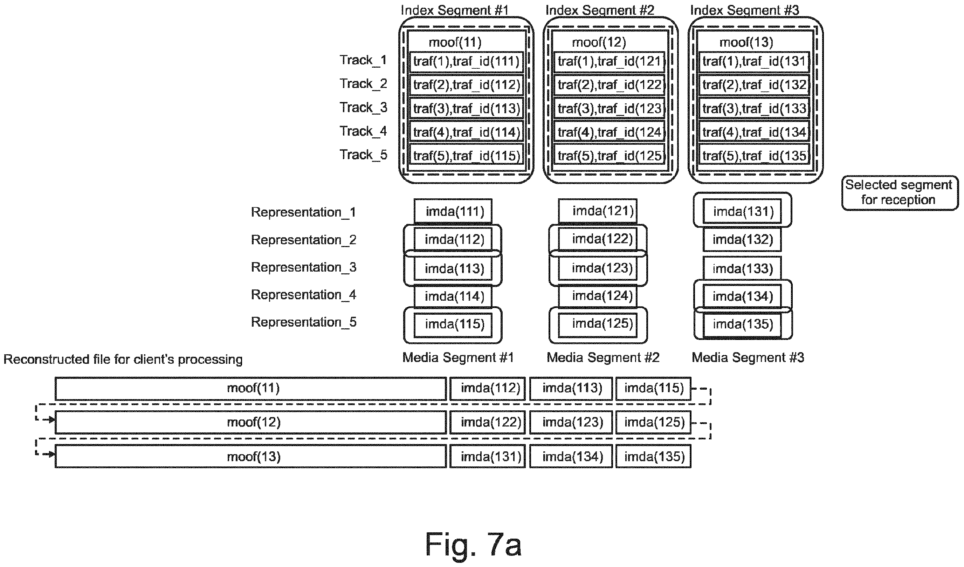

In accordance with an embodiment of the disclosure; the TrackFragmentHeaderIdentifierBox may be utilized in OMAF simple and advanced tiling profiles as is described in the Fig. 7a.

In Fig, 7a five tracks (Track_1,..., Track_5) and five representations (Representation _1,..., Representation_5) are shown but it should be noted that in practical situations the number of tracks and representations may be smaller than five or greater than five. Fig. 7a also illustrates three examples of index segments (#1, .., #5). The first index segment comprises a first movie fragment box (moof(11)) in which first track fragment boxes traf(1), ..., traf(5) from the five representations are included as well as identifiers (traf_id(111), ..., traf_id(115)) to the media segments (Media Segment #1, ..., Media Segment #3). The media segments comprise media data of the representations enclosed in identified media data boxes (imda(111), ..., imds(115); imda(121), ..., imds(125); imda(131), ..., imds(135);).

Fig.7a also illustrates with rounded rectangles some segments which have been selected for reception, in accordance with an example. At the bottom of Fig. 7a there is illustrated a file reconstructed on the basis of the selected segments for client device's processing.

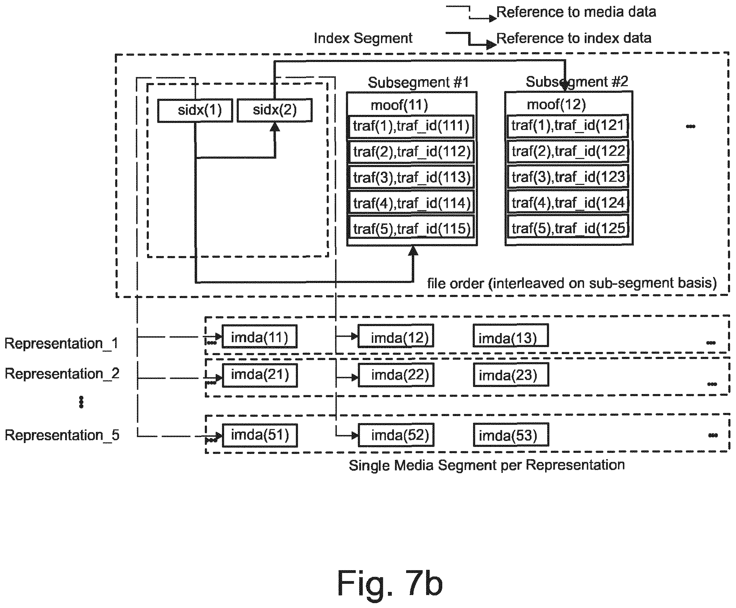

Fig. 7b illustrates this mapping between the moof box with multiple traf boxes and the indexed media segments in accordance with an embodiment of the disclosure. Dotted arrows illustrate references to media data and the thick arrows illustrate references to index data. There is depicted one index segment comprising subsegments #1 and #2 and indices sidx(1), sid_x(2) to the subsegments. The subsegments comprise movie fragment boxes moof(11), moof(12) shown in Fig. 7a. In addition to the references to index data the indices sidx(1), sidx(2) comprise indices to media data of the representations (imda(11), imda(51); ...; imda(13), imda(53)).

The segment index box (sidx) may be extended to contain the information about the integrated tracks and their related media data offsets after decompression.

The following syntax may be defined:

```
 aligned(8) class SegmentIndexBox extends FullBox('sidx', version,
 flags) {
                 unsigned int(32) reference_ID;
                 ... // as in ISOBMFF
                 unsigned int(16) reference_count;
                 for(i=1; i <= reference_count; i++)
                  {
                       bit (1) reference_type;
                        unsigned int(31) referenced_size;
                        ... // as in ISOBMFF
                  }
                 if (flags & SIDX_INTEGRATE > 0) {
                        unsigned int(16) num_integrated_tracks;
                        for(i = 0; i < num_integrated_tracks; i++)
                               unsigned int(32) integrated_track_id[i]; }
                 if (flags & SIDX_MEDIA_REF > 0)
                        for (i = 1; i <= reference_count; i++)
                                if (reference_type == 0)
                                       for (j = 0; j < num_integrated_tracks;
                                       j++)
                                               unsigned int(32)
                                               media_data_offset[i][j];
 }
```

[0232] In an embodiment, the reference_ID provides the number of tracks included as track fragments in the movie fragment.

The operation of the above syntax can be explained as follows.

In accordance with an example of the disclosure the terms SIDX_INTEGRATE and SIDX_MEDIA_REF are constant flag bits equal to 1. For example, SIDX_INTEGRATE is equal to 1, which is in binary form 0x0001, and SIDX_MEDIA_REF is equal to 2, which is in binary form 0x0010.

If the result of the binary AND operation (flags & SIDX INTEGRATE) is greater than 0, meaning according to this example that the second least significant bit of the flags is 1, it specifies that reference_type equal to 1 points to a movie fragment box 'moof' with a set of tracks.

num_integrated_tracks specifies the number of tracks that are consistently indexed by the references of this box. Hence, the numintegrated tracks indicates the amount of tracks in the movie fragment box and the identifiers of the integrated tracks integrated_track_id[i] are added to the SegmentIndexBox structure by an encoder or the identifiers can be fetched from this structure by a decoder.

integrated_track_id[i] specifies the i-th track_ID value of the set of tracks that are consistently indexed by the references of this box. When an integrated_track_id[0] is not present, it is inferred to be equal to the reference_ID, which is entered as a parameter to this structure.

media_data_offset[i][j] specifies the offset to the start of the MediaDataBox or IdentifiedMediaDataBox of the i-th referenced subsegment of the track with track_ID equal to integrated_track_id[j].

In the following, some DASH streaming aspects are described. During DASH streaming, the following operations may apply. DASH MPD may signal the presence of integrated boxes at an adaptation set level via an attribute, segment index 'sidx' box entries may point to integrated boxes, and segment index boxes may point to the integrated boxes.

The order of track fragment "traf" boxes that are in a movie fragment 'moof' box and belong to different tracks may be kept consistent and not vary from movie fragment box to movie fragment box. However, in some other examples other orders may also be possible.

The above described examples of the disclosure may provide some advantages. For example, the TrackFragmentHeaderIdentifierBox or extensions to Track Fragment Header Box and DataEntryTrafSeqNumImdaBox may remove the need to support range extensions for http requests. When range requests are not supported the implementation of the TrackFragmentHeaderIdentifierBox or extensions to Track Fragment Header Box and DataEntryTrafSeqNumImdaBox may reduce the overall bitrate by requesting/downloading only the media data that is needed for consumption by the end user.

The implementation of the TrackFragmentHeaderIdentifierBox or extensions to Track Fragment Header Box and DataEntryTrafSeqNumImdaBox may also reduce the complexity of maintaining the content when only specific media data needs to be updated.

In another embodiment of the disclosure, the presence of the TrackFragmentHeaderIdentifierBox or extensions to Track Fragment Header Box and DataEntryTrafSeqNumImdaBox may be signaled in the file format with a new brand or compatibility brand type.

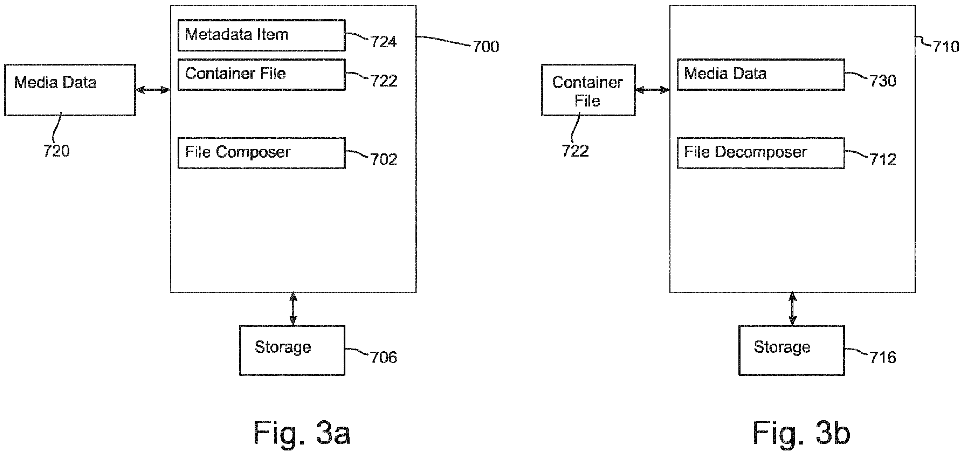

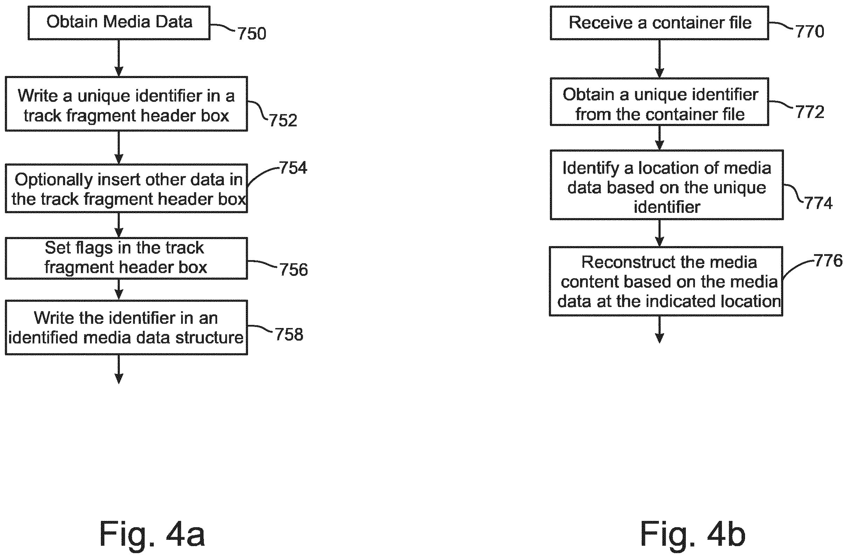

In the following, some example embodiments are described in more detail with reference to the apparatuses of Figs. 3a and 3b and flow diagrams of Figs. 4a and 4b. According to an example embodiment, the apparatus 700 may receive or otherwise obtain media data 720 for generating one or more container files from the media data (block 750 in Fig. 4a). The media data may comprise one or more media data units. Each media data unit may relate to video, audio, image or other media data (e.g. text). The apparatus 700 may have a file composer 702 or other means for obtaining and/or generating a container file 722. The file composer 702 may include one or more media data units in the container file 722, or the file composer 702 may include a reference to the one or more media data units in the container file 722. The reference may, for example, comprise a URN (Uniform Resource Name) or URL (Uniform Resource Locator) that identifies a file or a resource containing the one or more media data units. Said file or resource may reside in the same or different storage system, mass memory and/or apparatus than the container file 722.

The file composer 702 of the apparatus 700 or some other means writes 752 a unique identifier in the track fragment header or in a structure which is companion to the track fragment header, or derives a unique identifier from a movie fragment sequence number and track identifier of track fragment. The file composer 702 may further insert 754 in the track fragment header box other data related to the container file. For example, the file composer 702 may include a track_ID and some other data. The file composer 702 may also set flags 756 based on the fields which are present in the track fragment header box. As was earlier described, such fields may include none, one or more than one of the following fields: base data offset; sample description index; default_sample_duration; default sample _size; and default sample flags. The file composer 702 also writes 758 the same unique identifier in the identified media data structure.

The container file 722 and other information may be stored into the memory 706 and/or to some other storage location, and/or the container file 722 may be transmitted to another device e.g. for storing, decomposing and playback.

In accordance with an embodiment, a file reader 710 (Fig. 3b) or player may perform the following operations to decompose the media data from the container file 722.

The file reader 710 may comprise a file decomposer 712 which receives a container file (block 770 in Fig. 4b) comprising the unique identifier in the track fragment header or in a structure which is companion to the track fragment header, or derives a unique identifier from a movie fragment sequence number and track identifier of track fragment. When the file decomposer 712 has obtained 772 the unique identifier; the file decomposer 712 identifies 774 a location of the media data based on the same unique identifier in the identified media data structure. The file decomposer 712 may then use the media data indicated by the location to reconstruct 776 the received media content.

When an apparatus (700, 710, or alike) accesses files or resources other than the container file e.g. using a URI or URN, and the files or resources do not reside in the same apparatus as the container file, the accessing may be performed for example using a network connection, such as a wired, wireless (e.g. WLAN) and/or mobile (e.g. GSM, 3G, and/or LTE/4G) connection.

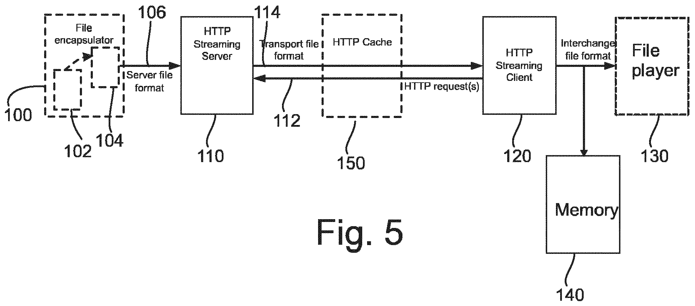

In Fig. 5 an example illustration of some functional blocks, formats, and interfaces included in a hypertext transfer protocol (HTTP) streaming system are shown. A file encapsulator 100 takes media bitstreams of a media presentation as input. The bitstreams may already be encapsulated in one or more container files 102. The bitstreams may be received by the file encapsulator 100 while they are being created by one or more media encoders. The file encapsulator converts the media bitstreams into one or more files 104, which can be processed by a streaming server 110 such as the HTTP streaming server. The output 106 of the file encapsulator is formatted according to a server file format. The HTTP streaming server 110 may receive requests from a streaming client 120 such as the HTTP streaming client. The requests may be included in a message or messages according to e.g. the hypertext transfer protocol such as a GET request message. The request may include an address indicative of the requested media stream. The address may be the so called uniform resource locator (URL). The HTTP streaming server 110 may respond to the request by transmitting the requested media file(s) and other information such as the metadata file(s) to the HTTP streaming client 120. In some cases the HTTP streaming client 120 may then convert the media file(s) to a file format suitable for play back by the HTTP streaming client and/or by a media player 130. In other cases, the received media file(s) are suitable for playback without conversions, and the HTTP streaming client 120 may provide the media file(s) to playback (e.g. by media player 130). The media data file(s) provided for playback may also be stored into a memory 140 and/or to another kind of storage medium. The HTTP streaming client and/or the media player may include or be operationally connected to one or more media decoders, which may decode the bitstreams contained in the HTTP responses into a format that can be rendered.

### HTTP Streaming Server

A HTTP streaming server 110 takes one or more files of a media presentation as input. The input files are formatted according to a server file format. The HTTP streaming server 110 responds 114 to HTTP requests 112 from a HTTP streaming client 120 by encapsulating media in HTTP responses. The HTTP streaming server outputs and transmits a file or many files of the media presentation formatted according to a transport file format and encapsulated in HTTP responses.

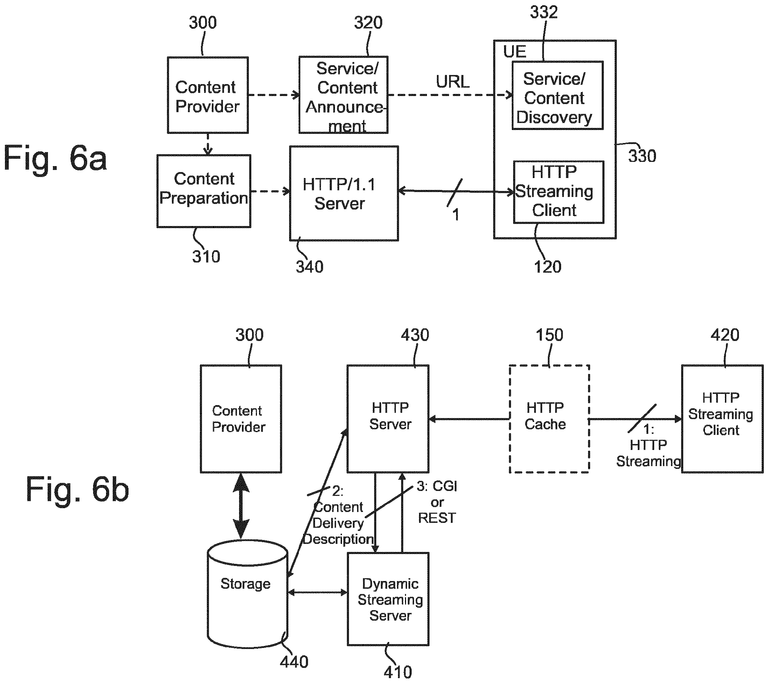

In accordance with an embodiment, the HTTP streaming servers 110 can be coarsely categorized into three classes. The first class is a web server, which is also known as a HTTP server, in a "static" mode. In this mode, the HTTP streaming client 120 may request one or more of the files of the presentation, which may be formatted according to the server file format, to be transmitted entirely or partly. The server is not required to prepare the content by any means. Instead, the content preparation is done in advance, possibly offline, by a separate entity. Fig. 6a illustrates an example of a web server as a HTTP streaming server. A content provider 300 may provide a content for content preparation 310 and an announcement of the content to a service/content announcement service 320. The user device 330, which may contain the HTTP streaming client 120, may receive information regarding the announcements from the service/content announcement service 320 wherein the user of the user device 330 may select a content for reception. The service/content announcement service 320 may provide a web interface and consequently the user device 330 may select a content for reception through a web browser in the user device 330. Alternatively or in addition, the service/content announcement service 320 may use other means and protocols such as the Service Advertising Protocol (SAP), the Really Simple Syndication (RSS) protocol, or an Electronic Service Guide (ESG) mechanism of a broadcast television system. The user device 330 may contain a service/content discovery element 332 to receive information relating to services/contents and e.g. provide the information to a display of the user device. The streaming client 120 may then communicate with the web server 340 to inform the web server 340 of the content the user has selected for downloading. The web server 340 may the fetch the content from the content preparation service 310 and provide the content to the HTTP streaming client 120.

The second class is a (regular) web server operationally connected with a dynamic streaming server as illustrated in Figure 6b. The dynamic streaming server 410 dynamically tailors the streamed content to a client 420 based on requests from the client 420. The HTTP streaming server 430 interprets the HTTP GET request from the client 420 and identifies the requested media samples from a given content. The HTTP streaming server 430 then locates the requested media samples in the content file(s) or from the live stream. It then extracts and envelopes the requested media samples in a container 440. Subsequently, the newly formed container with the media samples is delivered to the client in the HTTP GET response body.

The first interface "1" in Figs. 6a and 6b is based on the HTTP protocol and defines the syntax and semantics of the HTTP Streaming requests and responses. The HTTP Streaming requests/responses may be based on the HTTP GET requests/responses.

The second interface "2" in Fig. 6b enables access to the content delivery description. The content delivery description, which may also be called as a media presentation description, may be provided by the content provider 450 or the service provider. It gives information about the means to access the related content. In particular, it describes if the content is accessible via HTTP Streaming and how to perform the access. The content delivery description is usually retrieved via HTTP GET requests/responses but may be conveyed by other means too, such as by using SAP, RSS, or ESG.

The third interface "3" in Fig. 6b represents the Common Gateway Interface (CGI), which is a standardized and widely deployed interface between web servers and dynamic content creation servers. Other interfaces such as a representational State Transfer (REST) interface are possible and would enable the construction of more cache-friendly resource locators.

The Common Gateway Interface (CGI) defines how web server software can delegate the generation of web pages to a console application. Such applications are known as CGI scripts; they can be written in any programming language, although scripting languages are often used. One task of a web server is to respond to requests for web pages issued by clients (usually web browsers) by analyzing the content of the request, determining an appropriate document to send in response, and providing the document to the client. If the request identifies a file on disk, the server can return the contents of the file. Alternatively, the content of the document can be composed on the fly. One way of doing this is to let a console application compute the document's contents, and inform the web server to use that console application. CGI specifies which information is communicated between the web server and such a console application, and how.

The representational State Transfer is a style of software architecture for distributed hypermedia systems such as the World Wide Web (WWW). REST-style architectures consist of clients and servers. Clients initiate requests to servers; servers process requests and return appropriate responses. Requests and responses are built around the transfer of "representations" of "resources". A resource can be essentially any coherent and meaningful concept that may be addressed. A representation of a resource may be a document that captures the current or intended state of a resource. At any particular time, a client can either be transitioning between application states or at rest. A client in a rest state is able to interact with its user, but creates no load and consumes no per-client storage on the set of servers or on the network. The client may begin to send requests when it is ready to transition to a new state. While one or more requests are outstanding, the client is considered to be transitioning states. The representation of each application state contains links that may be used next time the client chooses to initiate a new state transition.

The third class of the HTTP streaming servers according to this example classification is a dynamic HTTP streaming server. Otherwise similar to the second class, but the HTTP server and the dynamic streaming server form a single component. In addition, a dynamic HTTP streaming server may be state-keeping.

Server-end solutions can realize HTTP streaming in two modes of operation: static HTTP streaming and dynamic HTTP streaming. In the static HTTP streaming case, the content is prepared in advance or independent of the server. The structure of the media data is not modified by the server to suit the clients' needs. A regular web server in "static" mode can only operate in static HTTP streaming mode. In the dynamic HTTP streaming case, the content preparation is done dynamically at the server upon receiving a non-cached request. A regular web server operationally connected with a dynamic streaming server and a dynamic HTTP streaming server can be operated in the dynamic HTTP streaming mode.

### Transport File Format

In an example embodiment transport file formats can be coarsely categorized into two classes. In the first class transmitted files are compliant with an existing file format that can be used for file playback. For example, transmitted files are compliant with the ISO Base Media File Format or the progressive download profile of the 3GPP file format.

In the second class transmitted files are similar to files formatted according to an existing file format used for file playback. For example, transmitted files may be fragments of a server file, which might not be self-containing for playback individually. In another approach, files to be transmitted are compliant with an existing file format that can be used for file playback, but the files are transmitted only partially and hence playback of such files requires awareness and capability of managing partial files.

Transmitted files can usually be converted to comply with an existing file format used for file playback.

### HTTP Cache

An HTTP cache 150 (Fig. 5) may be a regular web cache that stores HTTP requests and responses to the requests to reduce bandwidth usage, server load, and perceived lag. If an HTTP cache contains a particular HTTP request and its response, it may serve the requestor instead of the HTTP streaming server.

### HTTP streaming client

An HTTP streaming client 120 receives the file(s) of the media presentation. The HTTP streaming client 120 may contain or may be operationally connected to a media player 130 which parses the files, decodes the included media streams and renders the decoded media streams. The media player 130 may also store the received file(s) for further use. An interchange file format can be used for storage.

In some example embodiments the HTTP streaming clients can be coarsely categorized into at least the following two classes. In the first class conventional progressive downloading clients guess or conclude a suitable buffering time for the digital media files being received and start the media rendering after this buffering time. Conventional progressive downloading clients do not create requests related to bitrate adaptation of the media presentation.

In the second class active HTTP streaming clients monitor the buffering status of the presentation in the HTTP streaming client and may create requests related to bitrate adaptation in order to guarantee rendering of the presentation without interruptions.

The HTTP streaming client 120 may convert the received HTTP response payloads formatted according to the transport file format to one or more files formatted according to an interchange file format. The conversion may happen as the HTTP responses are received, i.e. an HTTP response is written to a media file as soon as it has been received. Alternatively, the conversion may happen when multiple HTTP responses up to all HTTP responses for a streaming session have been received. The conversion may for example comprise placing an initialization segment at the beginning of the interchange file followed by a sequential concatenation of the received HTTP response payloads.

### Interchange file formats

In some example embodiments the interchange file formats can be coarsely categorized into at least the following two classes. In the first class the received files are stored as such according to the transport file format.

In the second class the received files are stored according to an existing file format used for file playback.

### A media file player

A media file player 130 may parse, verify, decode, and render stored files. A media file player 130 may be capable of parsing, verifying, decoding, and rendering either or both classes of interchange files. A media file player 130 is referred to as a legacy player if it can parse and play files stored according to an existing file format but might not play files stored according to the transport file format. A media file player 130 is referred to as an HTTP streaming aware player if it can parse and play files stored according to the transport file format.

In some implementations, an HTTP streaming client merely receives and stores one or more files but does not play them. In contrast, a media file player parses, verifies, decodes, and renders these files while they are being received and stored.

In some implementations, the HTTP streaming client 120 and the media file player 130 are or reside in different devices. In some implementations, the HTTP streaming client 120 transmits a media file formatted according to a interchange file format over a network connection, such as a wireless local area network (WLAN) connection, to the media file player 130, which plays the media file. The media file may be transmitted while it is being created in the process of converting the received HTTP responses to the media file. Alternatively, the media file may be transmitted after it has been completed in the process of converting the received HTTP responses to the media file. The media file player 130 may decode and play the media file while it is being received. For example, the media file player 130 may download the media file progressively using an HTTP GET request from the HTTP streaming client. Alternatively, the media file player 130 may decode and play the media file after it has been completely received.

HTTP pipelining is a technique in which multiple HTTP requests are written out to a single socket without waiting for the corresponding responses. Since it may be possible to fit several HTTP requests in the same transmission packet such as a transmission control protocol (TCP) packet, HTTP pipelining allows fewer transmission packets to be sent over the network, which may reduce the network load.

A connection may be identified by a quadruplet of server IP address, server port number, client IP address, and client port number. Multiple simultaneous TCP connections from the same client to the same server are possible since each client process is assigned a different port number. Thus, even if all TCP connections access the same server process (such as the web server process at port 80 dedicated for HTTP), they all have a different client socket and represent unique connections. This is what enables several simultaneous requests to the same web site from the same computer.

### Categorization of Multimedia Formats

The multimedia container file format is an element used in the chain of multimedia content production, manipulation, transmission and consumption. There may be substantial differences between a coding format (also known as an elementary stream format) and a container file format. The coding format relates to the action of a specific coding algorithm that codes the content information into a bitstream. The container file format comprises means of organizing the generated bitstream in such way that it can be accessed for local decoding and playback, transferred as a file, or streamed, all utilizing a variety of storage and transport architectures. Furthermore, the file format can facilitate interchange and editing of the media as well as recording of received real-time streams to a file.

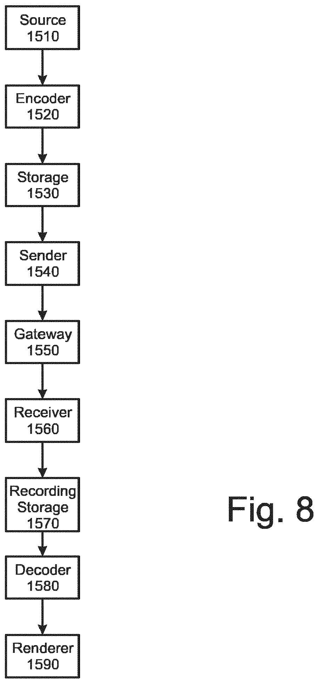

Fig. 8 is a graphical representation of an example of a generic multimedia communication system within which various embodiments may be implemented. A data source 1510 provides a source signal in an analog, uncompressed digital, or compressed digital format, or any combination of these formats. An encoder 1520 may include or be connected with a preprocessing, such as data format conversion and/or filtering of the source signal. The encoder 1520 encodes the source signal into a coded media bitstream. It should be noted that a bitstream to be decoded may be received directly or indirectly from a remote device located within virtually any type of network. Additionally, the bitstream may be received from local hardware or software. The encoder 1520 may be capable of encoding more than one media type, such as audio and video, or more than one encoder 1520 may be required to code different media types of the source signal. The encoder 1520 may also get synthetically produced input, such as graphics and text, or it may be capable of producing coded bitstreams of synthetic media. In the following, only processing of one coded media bitstream of one media type is considered to simplify the description. It should be noted, however, that typically real-time broadcast services comprise several streams (typically at least one audio, video and text sub-titling stream). It should also be noted that the system may include many encoders, but in the figure only one encoder 1520 is represented to simplify the description without a lack of generality. It should be further understood that, although text and examples contained herein may specifically describe an encoding process, one skilled in the art would understand that the same concepts and principles also apply to the corresponding decoding process and vice versa.

The coded media bitstream may be transferred to a storage 1530. The storage 1530 may comprise any type of mass memory to store the coded media bitstream. The format of the coded media bitstream in the storage 1530 may be an elementary self-contained bitstream format, or one or more coded media bitstreams may be encapsulated into a container file., or the coded media bitstream may be encapsulated into a Segment format suitable for DASH (or a similar streaming system) and stored as a sequence of Segments. If one or more media bitstreams are encapsulated in a container file, a file generator (not shown in the figure) may be used to store the one more media bitstreams in the file and create file format metadata, which may also be stored in the file. The encoder 1520 or the storage 1530 may comprise the file generator, or the file generator is operationally attached to either the encoder 1520 or the storage 1530. Some systems operate "live", i.e. omit storage and transfer coded media bitstream from the encoder 1520 directly to the sender 1540. The coded media bitstream may then be transferred to the sender 1540, also referred to as the server, on a need basis. The format used in the transmission may be an elementary self-contained bitstream format, a packet stream format, a Segment format suitable for DASH (or a similar streaming system), or one or more coded media bitstreams may be encapsulated into a container file. The encoder 1520, the storage 1530, and the server 1540 may reside in the same physical device or they may be included in separate devices. The encoder 1520 and the server 1540 may operate with live real-time content, in which case the coded media bitstream is typically not stored permanently, but rather buffered for small periods of time in the content encoder 1520 and/or in the server 1540 to smooth out variations in processing delay, transfer delay, and coded media bitrate.

The sender 1540 sends the coded media bitstream using a communication protocol stack. The stack may include but is not limited to one or more of Real-Time Transport Protocol (RTP), User Datagram Protocol (UDP), Hypertext Transfer Protocol (HTTP), Transmission Control Protocol (TCP), and Internet Protocol (IP). When the communication protocol stack is packet-oriented, the server 1540 encapsulates the coded media bitstream into packets. For example, when RTP is used, the server 1540 encapsulates the coded media bitstream into RTP packets according to an RTP payload format. Typically, each media type has a dedicated RTP payload format. It should be again noted that a system may contain more than one server 1540, but for the sake of simplicity, the following description only considers one server 1540.

If the media content is encapsulated in a container file for the storage 1530 or for inputting the data to the sender 1540, the server 1540 may comprise or be operationally attached to a "sending file parser" (not shown in the figure). In particular, if the container file is not transmitted as such but at least one of the contained coded media bitstream is encapsulated for transport over a communication protocol, a sending file parser locates appropriate parts of the coded media bitstream to be conveyed over the communication protocol. The sending file parser may also help in creating the correct format for the communication protocol, such as packet headers and payloads. The multimedia container file may contain encapsulation instructions, such as hint tracks in the ISOBMFF, for encapsulation of the at least one of the contained media bitstream on the communication protocol.

The sender 1540 may or may not be connected to a gateway 1550 through a communication network, which may e.g. be a combination of a CDN, the Internet and/or one or more access networks. The gateway 1550 may also or alternatively be referred to as a middle-box. For DASH, the gateway may be an edge server (of a CDN) or a web proxy. It is noted that the system may generally comprise any number gateways or alike, but for the sake of simplicity, the following description only considers one gateway 1550. The gateway 1550 may perform different types of functions, such as translation of a packet stream according to one communication protocol stack to another communication protocol stack, merging and forking of data streams, and manipulation of data stream according to the downlink and/or receiver capabilities, such as controlling the bit rate of the forwarded stream according to prevailing downlink network conditions. The gateway 1550 may be a server entity in various embodiments.

The system includes one or more receivers 1560, typically capable of receiving, demodulating, and de-capsulating the transmitted signal into a coded media bitstream. The coded media bitstream may be transferred to a recording storage 1570. The recording storage 1570 may comprise any type of mass memory to store the coded media bitstream. The recording storage 1570 may alternatively or additively comprise computation memory, such as random access memory. The format of the coded media bitstream in the recording storage 1570 may be an elementary self-contained bitstream format, or one or more coded media bitstreams may be encapsulated into a container file. If there are multiple coded media bitstreams, such as an audio stream and a video stream, associated with each other, a container file is typically used and the receiver 1560 comprises or is attached to a container file generator producing a container file from input streams. Some systems operate "live," i.e. omit the recording storage 1570 and transfer coded media bitstream from the receiver 1560 directly to the decoder 1580. In some systems, only the most recent part of the recorded stream, e.g., the most recent 10-minute excerption of the recorded stream, is maintained in the recording storage 1570, while any earlier recorded data is discarded from the recording storage 1570.

The coded media bitstream may be transferred from the recording storage 1570 to the decoder 1580. If there are many coded media bitstreams, such as an audio stream and a video stream, associated with each other and encapsulated into a container file or a single media bitstream is encapsulated in a container file e.g. for easier access, a file parser (not shown in the figure) is used to decapsulate each coded media bitstream from the container file. The recording storage 1570 or a decoder 1580 may comprise the file parser, or the file parser is attached to either recording storage 1570 or the decoder 1580. It should also be noted that the system may include many decoders, but here only one decoder 1570 is discussed to simplify the description without a lack of generality.

The coded media bitstream may be processed further by a decoder 1580, whose output is one or more uncompressed media streams. Finally, a renderer 1590 may reproduce the uncompressed media streams with a loudspeaker or a display, for example. The receiver 1560, recording storage 1570, decoder 1580, and renderer 1590 may reside in the same physical device or they may be included in separate devices.

A sender 1540 and/or a gateway 1550 may be configured to perform switching between different representations e.g. for switching between different viewports of 360-degree video content, view switching, bitrate adaptation and/or fast start-up, and/or a sender 1540 and/or a gateway 1550 may be configured to select the transmitted representation(s). Switching between different representations may take place for multiple reasons, such as to respond to requests of the receiver 1560 or prevailing conditions, such as throughput, of the network over which the bitstream is conveyed. In other words, the receiver 1560 may initiate switching between representations. A request from the receiver can be, e.g., a request for a Segment or a Subsegment from a different representation than earlier, a request for a change of transmitted scalability layers and/or sublayers, or a change of a rendering device having different capabilities compared to the previous one. A request for a Segment may be an HTTP GET request. A request for a Subsegment may be an HTTP GET request with a byte range. Additionally or alternatively, bitrate adjustment or bitrate adaptation may be used for example for providing so-called fast start-up in streaming services, where the bitrate of the transmitted stream is lower than the channel bitrate after starting or random-accessing the streaming in order to start playback immediately and to achieve a buffer occupancy level that tolerates occasional packet delays and/or retransmissions. Bitrate adaptation may include multiple representation or layer up-switching and representation or layer down-switching operations taking place in various orders.

A decoder 1580 may be configured to perform switching between different representations e.g. for switching between different viewports of 360-degree video content, view switching, bitrate adaptation and/or fast start-up, and/or a decoder 1580 may be configured to select the transmitted representation(s). Switching between different representations may take place for multiple reasons, such as to achieve faster decoding operation or to adapt the transmitted bitstream, e.g. in terms of bitrate, to prevailing conditions, such as throughput, of the network over which the bitstream is conveyed. Faster decoding operation might be needed for example if the device including the decoder 1580 is multi-tasking and uses computing resources for other purposes than decoding the video bitstream. In another example, faster decoding operation might be needed when content is played back at a faster pace than the normal playback speed, e.g. twice or three times faster than conventional real-time playback rate.

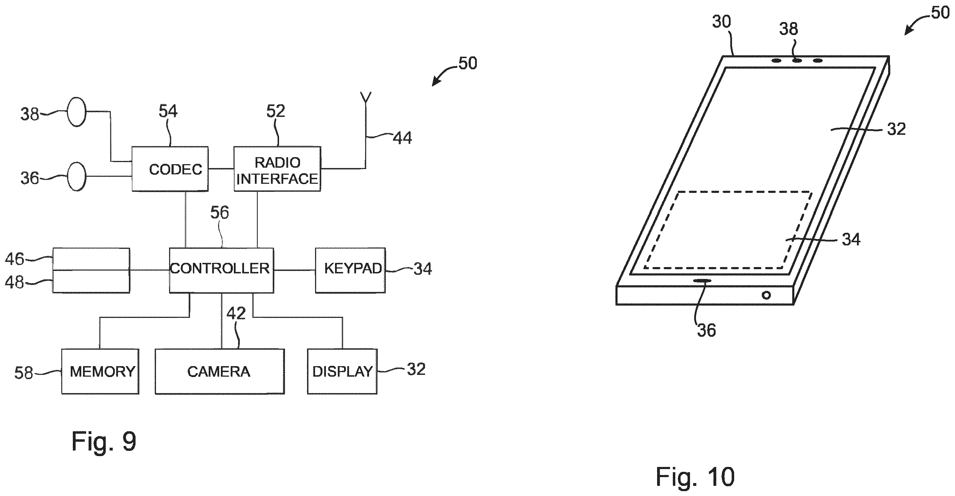

Fig. 9 shows a block diagram of a video coding system according to an example embodiment as a schematic block diagram of an exemplary apparatus or electronic device 50, which may incorporate a codec according to an embodiment of the disclosure. Fig. 10 shows a layout of an apparatus according to an example embodiment. The elements of Figs. 8 and 9 will be explained next.

The electronic device 50 may for example be a mobile terminal or user equipment of a wireless communication system. However, it would be appreciated that embodiments of the disclosure may be implemented within any electronic device or apparatus which may require encoding and decoding or encoding or decoding video images.

The apparatus 50 may comprise a housing 30 for incorporating and protecting the device. The apparatus 50 further may comprise a display 32 in the form of a liquid crystal display. In other embodiments of the disclosure the display may be any suitable display technology suitable to display an image or video. The apparatus 50 may further comprise a keypad 34. In other embodiments of the disclosure any suitable data or user interface mechanism may be employed. For example the user interface may be implemented as a virtual keyboard or data entry system as part of a touch-sensitive display. The apparatus may comprise a microphone 36 or any suitable audio input which may be a digital or analogue signal input. The apparatus 50 may further comprise an audio output device which in embodiments of the disclosure may be any one of: an earpiece 38, speaker, or an analogue audio or digital audio output connection. The apparatus 50 may also comprise a battery 40 (or in other embodiments of the disclosure the device may be powered by any suitable mobile energy device such as solar cell, fuel cell or clockwork generator). The apparatus may further comprise a camera 42 capable of recording or capturing images and/or video. In accordance with an embodiment, the apparatus 50 may further comprise an infrared port for short range line of sight communication to other devices. In other embodiments the apparatus 50 may further comprise any suitable short range communication solution such as for example a Bluetooth wireless connection or a USB/firewire wired connection.

The apparatus 50 may comprise a controller 56 or processor for controlling the apparatus 50. The controller 56 may be connected to memory 58 which in embodiments of the disclosure may store both data in the form of image and audio data and/or may also store instructions for implementation on the controller 56. The controller 56 may further be connected to codec circuitry 54 suitable for carrying out coding and decoding of audio and/or video data or assisting in coding and decoding carried out by the controller 56.

The apparatus 50 may further comprise a card reader 48 and a smart card 46, for example a UICC and UICC reader for providing user information and being suitable for providing authentication information for authentication and authorization of the user at a network.

The apparatus 50 may comprise radio interface circuitry 52 connected to the controller and suitable for generating wireless communication signals for example for communication with a cellular communications network, a wireless communications system or a wireless local area network. The apparatus 50 may further comprise an antenna 44 connected to the radio interface circuitry 52 for transmitting radio frequency signals generated at the radio interface circuitry 52 to other apparatus(es) and for receiving radio frequency signals from other apparatus(es).

In accordance with an embodiment, the apparatus 50 comprises a camera capable of recording or detecting individual frames which are then passed to the codec 54 or controller for processing. In accordance with an embodiment, the apparatus may receive the video image data for processing from another device prior to transmission and/or storage. In accordance with an embodiment, the apparatus 50 may receive either wirelessly or by a wired connection the image for coding/decoding.

Fig. 10 shows an arrangement for video coding comprising a plurality of apparatuses, networks and network elements according to an example embodiment. With respect to Fig. 10, an example of a system within which embodiments of the present disclosure can be utilized is shown. The system 10 comprises multiple communication devices which can communicate through one or more networks. The system 10 may comprise any combination of wired or wireless networks including, but not limited to a wireless cellular telephone network (such as a GSM, UMTS, CDMA network etc.), a wireless local area network (WLAN) such as defined by any of the IEEE 802.x standards, a Bluetooth personal area network, an Ethernet local area network, a token ring local area network, a wide area network, and the Internet.

The system 10 may include both wired and wireless communication devices or apparatus 50 suitable for implementing embodiments of the disclosure. For example, the system shown in Fig. 10 shows a mobile telephone network 11 and a representation of the internet 28. Connectivity to the internet 28 may include, but is not limited to, long range wireless connections, short range wireless connections, and various wired connections including, but not limited to, telephone lines, cable lines, power lines, and similar communication pathways.

The example communication devices shown in the system 10 may include, but are not limited to, an electronic device or apparatus 50, a combination of a personal digital assistant (PDA) and a mobile telephone 14, a PDA 16, an integrated messaging device (IMD) 18, a desktop computer 20, a notebook computer 22. The apparatus 50 may be stationary or mobile when carried by an individual who is moving. The apparatus 50 may also be located in a mode of transport including, but not limited to, a car, a truck, a taxi, a bus, a train, a boat, an airplane, a bicycle, a motorcycle or any similar suitable mode of transport.

Some or further apparatuses may send and receive calls and messages and communicate with service providers through a wireless connection 25 to a base station 24. The base station 24 may be connected to a network server 26 that allows communication between the mobile telephone network 11 and the internet 28. The system may include additional communication devices and communication devices of various types.

The communication devices may communicate using various transmission technologies including, but not limited to, code division multiple access (CDMA), global systems for mobile communications (GSM), universal mobile telecommunications system (UMTS), time divisional multiple access (TDMA), frequency division multiple access (FDMA), transmission control protocol-internet protocol (TCP-IP), short messaging service (SMS), multimedia messaging service (MMS), email, instant messaging service (IMS), Bluetooth, IEEE 802.11 and any similar wireless communication technology. A communications device involved in implementing various embodiments of the present disclosure may communicate using various media including, but not limited to, radio, infrared, laser, cable connections, and any suitable connection.

In the above, some embodiments have been described with reference to and/or using terminology of HEVC. It needs to be understood that embodiments may similarly be realized with any video encoder and/or video decoder with respective terms of other codecs. For example, rather than tiles or tile sets, embodiments could be realized with rectangular slice groups of H.264/AVC.

In the above, some embodiments have been described with reference to segments, e.g. as defined in MPEG-DASH.. It needs to be understood that embodiments may similarly be realized with subsegments, e.g. as defined in MPEG-DASH.

In the above, some embodiments have been described in relation to ISOBMFF, e.g. when it comes to segment format and/or movie fragment format. It needs to be understood that embodiments could similarly be realized with any other file format, such as Matroska, with similar concepts and/or capability and/or structures as those in ISOBMFF.

In the above, some embodiments have been described with reference to the term extractor track. It needs to be understood that embodiments can be realized with any type of collector tracks, rather than just extractor tracks. More specifically, the embodiments can be realized with tile base tracks instead of extractor tracks. Moreover, embodiments can be realized by using both extractor tracks and tile base tracks, e.g. in the same file or for different Representations included in the same MPD.

In the above, where the example embodiments have been described with reference to file writing or authoring, it needs to be understood that the resulting file and the file parser or reader may have corresponding elements in them. Likewise, where the example embodiments have been described with reference to a file. It parsing or reading, it needs to be understood that the file writer or author may have structure and/or computer program for generating the file to be parsed by the file parser or reader.

In the above, where the example embodiments have been described with reference to an encoder, it needs to be understood that the resulting bitstream and the decoder may have corresponding elements in them. Likewise, where the example embodiments have been described with reference to a decoder, it needs to be understood that the encoder may have structure and/or computer program for generating the bitstream to be decoded by the decoder.

The embodiments of the disclosure described above describe the codec in terms of separate encoder and decoder apparatus in order to assist the understanding of the processes involved. However, it would be appreciated that the apparatus, structures and operations may be implemented as a single encoder-decoder apparatus/structure/operation. Furthermore, it is possible that the coder and decoder may share some or all common elements.

Although the above examples describe embodiments of the disclosure operating within a codec within an electronic device, it would be appreciated that the invention as defined in the claims may be implemented as part of any video codec. Thus, for example, embodiments of the disclosure may be implemented in a video codec which may implement video coding over fixed or wired communication paths.

Thus, user equipment may comprise a video codec such as those described in embodiments of the disclosure above. It shall be appreciated that the term user equipment is intended to cover any suitable type of wireless user equipment, such as mobile telephones, portable data processing devices or portable web browsers.

Furthermore elements of a public land mobile network (PLMN) may also comprise video codecs as described above.

In general, the various embodiments of the disclosure may be implemented in hardware or special purpose circuits, software, logic or any combination thereof. For example, some aspects may be implemented in hardware, while other aspects may be implemented in firmware or software which may be executed by a controller, microprocessor or other computing device, although the invention is not limited thereto. While various aspects of the invention may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

The embodiments of this disclosure may be implemented by computer software executable by a data processor of the mobile device, such as in the processor entity, or by hardware, or by a combination of software and hardware. Further in this regard it should be noted that any blocks of the logic flow as in the Figures may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD.

The memory may be of any type suitable to the local technical environment and may be implemented using any suitable data storage technology, such as semiconductor based memory devices, magnetic memory devices and systems, optical memory devices and systems, fixed memory and removable memory. The data processors may be of any type suitable to the local technical environment, and may include one or more of general purpose computers, special purpose computers, microprocessors, digital signal processors (DSPs) and processors based on multi core processor architecture, as non-limiting examples.

Embodiments of the disclosures may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

Programs, such as those provided by Synopsys Inc., of Mountain View, California and Cadence Design, of San Jose, California automatically route conductors and locate components on a semiconductor chip using well established rules of design as well as libraries of pre stored design modules. Once the design for a semiconductor circuit has been completed, the resultant design, in a standardized electronic format (e.g., Opus, GDSII, or the like) may be transmitted to a semiconductor fabrication facility or "fab" for fabrication.

The foregoing description has provided by way of exemplary and non-limiting examples a full and informative description of the exemplary embodiment of this disclosure. However, various modifications and adaptations may become apparent to those skilled in the relevant arts in view of the foregoing description, when read in conjunction with the accompanying drawings and the appended claims. However, all such and similar modifications of the teachings of this disclosure will still fall within the scope of this invention.

## Claims

1. An apparatus for file writing comprising:
means for obtaining an identifier;
means for writing in an index segment an identified media data element; and
means for including into the identified media data element the identifier to be used as a reference for the identified media data by other elements.

2. The apparatus according to claim 1, wherein the means for obtaining an identifier comprises:
means for deriving the identifier from a movie fragment sequence number and a track identifier of a track fragment.

3. The apparatus according to any of claim 1 or 2, wherein the means for writing comprising:
means for writing the identifier in a track fragment header or in a structure which is companion to the track fragment header.

4. The apparatus according to any of the claims 1 to 3, further comprising:
means for including the identifier in a track fragment header box.

5. The apparatus according to any of the claims 1 to 4, further comprising:
means for including into a container file the index segment; and
means for including into the container file the media data.

6. The apparatus according to claim 5, further comprising:
means for including into the container file a first sample entry that references the data reference element;
means for including into the container file a movie fragment that comprises a track fragment and comprises the first movie fragment sequence number or the first track fragment decode time; and
means for including into the track fragment a sample description index that identifies the first sample entry to be in use for the track fragment and is indicative that the identified media data element comprises media data for the track fragment.

7. An apparatus for file reading comprising:
means for receiving a container file comprising an identifier in a track fragment header or in a structure which is companion to the track fragment header or deriving the identifier from a movie fragment sequence number and a track identifier of a track fragment;
means for identifying a media data structure; and
means for identifying a location of media data based on the identifier in the identified media data structure.

8. The apparatus according to claim 7, wherein the container file is structured according to ISO/IEC base media file format (ISOBMFF), the apparatus further comprising:
means for parsing the identifier from the container file as a traf identifier; and
means for using the identifier as a reference to the identified media data in an IdentifiedMediaDataBox.

9. The apparatus according to claim 7, further comprising:
means for parsing from the container file the identifier as a first element of the identified media data element.

10. The apparatus according to claim 9, further comprising:
means for parsing the identified media data element by means of a data reference element.

11. The apparatus according to claim 10, further comprising:
means for parsing from the container file the data reference element that indicates an identified media data element with an identifier being any movie fragment sequence number or any track fragment decode time;
means for parsing from the container file a first sample entry that references the data reference element;
means for parsing from the container file a movie fragment that comprises a track fragment and comprises the first movie fragment sequence number or the first track fragment decode time; and
means for parsing from the track fragment a sample description index that identifies the first sample entry to be in use for the track fragment and is indicative that the identified media data element comprises media data for the track fragment.

12. A method for file writing comprising:
obtaining an identifier;
writing in an index segment an identified media data element;
including into the identified media data element the identifier to be used as a reference for the identified media data by other elements.

13. The method according to claim 12, wherein obtaining the identifier comprises:
deriving the identifier from a movie fragment sequence number and a track identifier of a track fragment.

14. The method according to any of claim 12 or 13, wherein said writing comprising:
writing the identifier in a track fragment header or in a structure which is companion to the track fragment header.

15. The method according to any of the claims 12 to 14, further comprising:
including the identifier in a track fragment header box.
